(19) **Europäisches Patentamt**
**European Patent Office**
**Office européen des brevets**

(11) **EP 4 030 832 A1**

(12) **EUROPEAN PATENT APPLICATION**
published in accordance with Art. 153(4) EPC

(43) Date of publication:
**20.07.2022 Bulletin 2022/29**

(21) Application number: **19947938.7**

(22) Date of filing: **30.09.2019**

(51) International Patent Classification (IPC):
**H04W 52/02** *(2009.01)*  **H04W 76/28** *(2018.01)*
**H04W 16/28** *(2009.01)*

(52) Cooperative Patent Classification (CPC):
**H04W 16/28; H04W 52/02; H04W 76/28;**
**Y02D 30/70**

(86) International application number:
**PCT/CN2019/109718**

(87) International publication number:
**WO 2021/062794 (08.04.2021 Gazette 2021/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen, Guangdong**
**518129 (CN)**

(72) Inventors:
• **ZHANG, Zhanzhan**
**Shenzhen, Guangdong 518129 (CN)**
• **TIE, Xiaolei**
**Shenzhen, Guangdong 518129 (CN)**
• **HUA, Meng**
**Shenzhen, Guangdong 518129 (CN)**
• **HUANG, Wenwen**
**Shenzhen, Guangdong 518129 (CN)**
• **ZHOU, Han**
**Shenzhen, Guangdong 518129 (CN)**

(74) Representative: **Maiwald Patent- und**
**Rechtsanwaltsgesellschaft mbH**
**Elisenhof**
**Elisenstraße 3**
**80335 München (DE)**

(54) **SIGNAL MEASUREMENT METHOD AND COMMUNICATION APPARATUS**

(57)    This application discloses a signal measurement method and a communications apparatus to resolve technical problems in the prior art such as poor reliability of signal measurement and high power consumption. The method includes: receiving a reference signal in a non-active time non-active time in a discontinuous reception DRX state; and measuring the reference signal.

FIG. 4A

## Description

### TECHNICAL FIELD

This application relates to the field of mobile communications technologies, and in particular, to a signal measurement method and a communications apparatus.

### BACKGROUND

In a 5th Generation mobile communications technology (the 5th generation, 5G) new radio (new radio, NR) system, a network device configures a downlink reference signal; and user equipment (user equipment, UE) may perform measurement on the reference signal, and may further feed back a measurement result to a base station for some measurement purposes, for example, report channel state information (channel state information, CSI).

The NR technical specification (technical specification, TS) 38.214 specifies "If the UE is configured with DRX, the most recent CSI measurement occasion occurs in DRX active time for CSI to be reported. " To be specific, if the UE is configured with discontinuous reception (Discontinuous Reception, DRX), a CSI measurement occasion (that is, an occasion for measuring a channel state information reference signal (channel state information reference signal, CSI-RS)) needs to be in the DRX active time (active time) for the UE to report channel state information (channel state information, CSI). In other words, the UE needs to perform signal measurement only on a reference signal in the active time. For a reference signal outside the active time, the UE does not need to measure the reference signal because the UE does not need to report a reference signal measurement result.

If each wake-up signal (wake-up signal, WUS) in a plurality of consecutive DRX cycles indicates non wake-up of the UE, that is, not monitoring a PDCCH in a DRX on-duration (DRX on-duration) corresponding to the WUS, the UE does not start a DRX-onduration timer (DRX-onduration timer) in the plurality of consecutive DRX cycles, that is, the UE is outside the active time, and correspondingly, the UE does not perform CSI measurement and reporting either.

Because the UE does not perform CSI measurement and reporting for a long time, the base station cannot receive CSI from the UE for a long time, and WUS reliability is severely affected. In addition, after the UE is woken up from long sleep, CSI first reported by the UE is a measurement result of CSI in a previous active time, but a time interval between the previous active time and a current reporting occasion is relatively long, and a channel state may have changed. Consequently, the CSI is inaccurate, and performance of the UE is relatively poor in a time period after the UE is woken up. Moreover, reporting of inaccurate CSI is unnecessary and wastes power consumption of the UE. In addition, for beam management (beam management), if the UE does not report CSI for a long time, the base station cannot update a transmit beam (beam). As a result, a beam failure (beam failure) is caused, the UE is further triggered to perform beam failure recovery (beam failure recovery, BFR), and power consumption of the UE is increased.

Therefore, it can be seen that there are technical problems such as poor reliability of signal measurement and high power consumption in the prior art.

### SUMMARY

Embodiments of the present invention provide a signal measurement method and a communications apparatus to improve reliability of signal measurement.

According to a first aspect, an embodiment of the present invention provides a signal measurement method, applied to user equipment UE, where the method includes: receiving a reference signal in a non-active time non-active time in a discontinuous reception DRX state; and measuring the reference signal. In other words, the UE can receive the reference signal in the non-active time non-active time in the discontinuous reception DRX state, and measure the reference signal. Therefore, the UE can obtain an accurate reference signal measurement result in time even in long sleep or after being woken up from long sleep. Further, PDCCH-WUS reliability and performance of the UE woken up from long sleep are ensured. In addition, a CSI failure caused by non-reporting of CSI by the UE for a long time can also be avoided, and power consumption of the UE is reduced.

In a possible design, the receiving a reference signal in a non-active time in a DRX state may include: receiving the reference signal in a first time period before an on-duration on-duration in the DRX state. In other words, the UE can receive and measure the reference signal in the first time period before the on-duration. Therefore, the UE or a network device can obtain an accurate reference signal measurement result in time even if the UE is in long sleep or after the UE is woken up from long sleep. Further, PDCCH-WUS reliability and performance of the UE woken up from long sleep are ensured. In addition, the UE can further perform beam management based on the reference signal in the non-active time. Therefore, a beam failure is avoided, and power consumption of the UE is reduced.

In a possible design, the first time period may be periodic. For example, the first time period may occur periodically at specified time intervals, and a cycle in which the first time period occurs is N times a DRX cycle or a WUS cycle, where N is a positive integer. Because periodicity of the first time period is designed, it can be ensured that even if the UE is in a long sleep state, the UE can still measure the reference signal periodically and obtain an accurate signal measurement result.

In a possible design, the first time period may be aperiodic. For example, the reference signal is received in a first time period before an on-duration of a first DRX cycle after the UE sleeps for M consecutive DRX cycles, where M is an integer greater than or equal to 0. Therefore, it can be ensured that after the UE sleeps continuously for a time period, the UE can measure the reference signal in time and obtain an accurate signal measurement result.

In a possible design, the first time period may be before the on-duration and after a wake-up signal WUS detection time corresponding to the on-duration. Therefore, performance of the UE woken up in the on-duration after long sleep can be better ensured.

In a possible design, the first time period is before a WUS detection time corresponding to the on-duration. Therefore, PDCCH-WUS reliability can be better ensured.

In a possible design, the method further includes: determining a reference signal resource, and receiving the reference signal on the reference signal resource, where a time domain position of the reference signal resource is in the non-active time in the DRX state.

In a possible design, the reference signal resource may include: X reference signal resources before or after the WUS detection occasion corresponding to the on-duration, where X is a positive integer. In this manner, the reference signal resource is associated with the WUS detection occasion. Therefore, PDCCH-WUS reliability or performance of the UE woken up in the on-duration after long sleep can be better ensured.

In a possible design, the X reference signal resources are before the WUS detection occasion corresponding to the on-duration, and a time interval between an end time of at least one of the X reference signal resources and a start time of the WUS detection occasion is greater than or equal to a first threshold. Therefore, PDCCH-WUS reliability can be better ensured.

In a possible design, the X reference signal resources are after the WUS detection occasion corresponding to the on-duration, and a time interval between a start time of at least one of the X reference signal resources and an end time of the WUS detection occasion is greater than or equal to a second threshold. This can better ensure performance of the UE woken up in the on-duration after long sleep and help reduce power consumption of the UE.

In a possible design, the X reference signal resources are before the on-duration, and a time interval between an end time of at least one of the X reference signal resources and a start time of the on-duration is greater than or equal to a third threshold. Therefore, performance of the UE woken up in the on-duration after long sleep can be better ensured.

In a possible design, the method may further include: reporting a measurement result to a network side before the on-duration or in the on-duration, where the measurement result is obtained by measuring the reference signal; or after determining that a WUS signal indicates wake-up of the UE in an on-duration corresponding to the WUS signal, reporting a measurement result to a network side before the on-duration corresponding to the WUS signal or in the on-duration corresponding to the WUS signal, where the measurement result is obtained by measuring the reference signal; or reporting a measurement result to a network side before the on-duration of the first DRX cycle or in the on-duration of the first DRX cycle after the UE sleeps for the M consecutive DRX cycles, where the measurement result is obtained by measuring the reference signal. In other words, the UE can also perform reference signal measurement and reporting in the non-active time, or the UE still reports a measurement result in the active time but measures the reference signal in the non-active time. Therefore, the network side can obtain an accurate reference signal measurement result in time even if the UE is in long sleep or after the UE is woken up from long sleep. Further, PDCCH-WUS reliability and performance of the UE woken up from long sleep are ensured. In addition, a CSI failure caused by non-reporting of CSI by the UE for a long time can also be avoided, and power consumption of the UE is reduced.

In another possible design, the receiving a reference signal in a non-active time in a DRX state may further include: receiving the reference signal in a specific on-duration, where at least one specific on-duration is in the non-active time in the DRX state. In other words, when the at least one specific on-duration is in the non-active time, the UE can perform reference signal measurement and reporting in the non-active time. Therefore, the network device or the UE can obtain an accurate reference signal measurement result in time even if the UE is in long sleep or after the UE is woken up from long sleep. Further, PDCCH-WUS reliability and performance of the UE woken up from long sleep are ensured. In addition, the UE can further perform beam management based on the reference signal in the non-active time. Therefore, a beam failure is avoided, and power consumption of the UE is reduced.

In a possible design, the specific on-duration may be periodic. For example, the specific on-duration occurs periodically at specified time intervals, and a cycle in which the specific on-duration occurs may be P times a DRX cycle, where P is a positive integer. Because periodicity of the specific on-duration is designed, it can be ensured that even if the UE is in a long sleep state, the UE can still measure the reference signal periodically and obtain an accurate signal measurement result.

In a possible design, the specific on-duration may be aperiodic. For example, the specific on-duration is the on-duration of the first DRX cycle after the UE sleeps for the M consecutive DRX cycles. Therefore, it can be ensured that after the UE sleeps continuously for a time period, the UE can still measure the reference signal in time (that is, in the specific on-duration) and obtain an accurate signal measurement result. In addition, a measurement frequency of the UE can be reduced, and power consumption of the UE is reduced.

In a possible design, the method further includes: reporting a measurement result to the network side in the specific on-duration. Specifically, the UE may feed back a measurement result to a base station for some measurement purposes, for example, report CSI. Therefore, the network side can obtain an accurate signal measurement result in time, and communication quality is further improved.

In a possible design, to improve flexibility of the solution, the DRX cycle in this embodiment of the present invention may be a long DRX cycle, or may be a short DRX cycle. This is not limited herein.

In a possible design, the method may further include: determining a reporting resource, and reporting the measurement result on the reporting resource to the network side, where the measurement result is obtained by measuring the reference signal, and the reporting resource includes at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released. In other words, the reference signal resource may be originally configured, or may be additionally configured for measuring the signal in the non-active time non-active time in the discontinuous reception DRX state. Therefore, flexibility of the solution is improved.

Correspondingly, according to a second aspect, an embodiment of the present invention provides a signal measurement method, applied to a network side, where the method includes: determining a reference signal resource; and transmitting a reference signal based on the reference signal resource in a non-active time non-active time in a discontinuous reception DRX state.

In a possible design, the transmitting a reference signal in a non-active time in a DRX state may include: transmitting the reference signal in a first time period before an on-duration on-duration in the DRX state.

In a possible design, the first time period occurs periodically at specified time intervals, and a cycle in which the first time period occurs is N times a DRX cycle or a WUS cycle, where N is a positive integer.

In a possible design, the transmitting the reference signal in a first time period before an on-duration on-duration in the DRX state may include: transmitting the reference signal in a first time period before an on-duration of a first DRX cycle after the UE sleeps for M consecutive DRX cycles, where M is an integer greater than or equal to 0.

In a possible design, the first time period is before the on-duration and after a wake-up signal WUS detection time corresponding to the on-duration; or the first time period is before a WUS detection time corresponding to the on-duration.

In a possible design, the reference signal resource may include: X reference signal resources before or after the WUS detection occasion corresponding to the on-duration, where X is a positive integer.

In a possible design, the X reference signal resources may be before the WUS detection occasion corresponding to the on-duration, and a time interval between an end time of at least one of the X reference signal resources and a start time of the WUS detection occasion is greater than or equal to a first threshold; or the X reference signal resources may be after the WUS detection occasion corresponding to the on-duration, and a time interval between a start time of at least one of the X reference signal resources and an end time of the WUS detection occasion is greater than or equal to a second threshold; or the X reference signal resources may be before the on-duration, and a time interval between an end time of at least one of the X reference signal resources and a start time of the on-duration is greater than or equal to a third threshold.

In a possible design, after the transmitting a reference signal in a non-active time in a DRX state, the method may further include: receiving a measurement result before the on-duration or in the on-duration, where the measurement result is obtained by the UE by measuring the reference signal; or after determining that a WUS signal indicates wake-up of the UE in an on-duration corresponding to the WUS signal, receiving a measurement result before the on-duration corresponding to the WUS signal or in the on-duration corresponding to the WUS signal, where the measurement result is obtained by the UE by measuring the reference signal; or receiving a measurement result before the on-duration of the first DRX cycle or in the on-duration of the first DRX cycle after the UE sleeps for the M consecutive DRX cycles, where the measurement result is obtained by the UE by measuring the reference signal.

In another possible design, the transmitting a reference signal in a non-active time in a DRX state may further include: transmitting the reference signal in a specific on-duration, where at least one specific on-duration is in the non-active time in the DRX state.

In a possible design, the specific on-duration may occur periodically at specified time intervals. For example, a cycle in which the specific on-duration occurs may be P times a DRX cycle, where P is a positive integer.

In a possible design, the specific on-duration may be the on-duration of the first DRX cycle after the UE sleeps for the M consecutive DRX cycles.

In a possible design, the method may further include: receiving, in the specific on-duration, a measurement result reported by the UE.

In a possible design, the DRX cycle is a long DRX cycle or a short DRX cycle.

In a possible design, the method may further include: determining a reporting resource, and receiving the measurement result on the reporting resource, where the measurement result is obtained by measuring the reference signal, and the reporting resource includes at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released.

For a beneficial effect of each design in the second aspect, refer to the beneficial effect of the corresponding design in the first aspect. Details are not described again herein.

According to a third aspect, an embodiment of the present invention provides a communications apparatus, where the communications apparatus is, for example, UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

In a possible design, the apparatus includes: a receiving unit, which may be configured to receive a reference signal in a non-active time non-active time in a discontinuous reception DRX state; and a processing unit, which may be configured to measure the reference signal.

In a possible design, the receiving unit is specifically configured to receive the reference signal in a first time period before an on-duration on-duration in the DRX state.

In a possible design, the first time period occurs periodically at specified time intervals, and a cycle in which the first time period occurs is N times a DRX cycle or a WUS cycle, where N is a positive integer.

In a possible design, the receiving unit is specifically configured to receive the reference signal in a first time period before an on-duration of a first DRX cycle after the communications apparatus sleeps for M consecutive DRX cycles, where M is an integer greater than or equal to 0.

In a possible design, the first time period is before the on-duration and after a wake-up signal WUS detection time corresponding to the on-duration; or the first time period is before a WUS detection time corresponding to the on-duration.

In a possible design, the processing unit may be further configured to determine a reference signal resource; and the receiving unit may be further configured to receive the reference signal on the reference signal resource, where a time domain position of the reference signal resource is in the non-active time in the DRX state.

In a possible design, the reference signal resource includes: X reference signal resources before or after the WUS detection occasion corresponding to the on-duration, where X is a positive integer.

In a possible design, the X reference signal resources are before the WUS detection occasion corresponding to the on-duration, and a time interval between an end time of at least one of the X reference signal resources and a start time of the WUS detection occasion is greater than or equal to a first threshold; or the X reference signal resources are after the WUS detection occasion corresponding to the on-duration, and a time interval between a start time of at least one of the X reference signal resources and an end time of the WUS detection occasion is greater than or equal to a second threshold; or the X reference signal resources are before the on-duration, and a time interval between an end time of at least one of the X reference signal resources and a start time of the on-duration is greater than or equal to a third threshold.

In a possible design, the apparatus further includes a transmission unit, which may be configured to: report a measurement result to a network side before the on-duration or in the on-duration, where the measurement result is obtained by measuring the reference signal; or after it is determined that a WUS signal indicates wake-up of the communications apparatus in an on-duration corresponding to the WUS signal, report a measurement result to a network side before the on-duration corresponding to the WUS signal or in the on-duration corresponding to the WUS signal, where the measurement result is obtained by measuring the reference signal; or report a measurement result to a network side before the on-duration of the first DRX cycle or in the on-duration of the first DRX cycle after the communications apparatus sleeps for the M consecutive DRX cycles, where the measurement result is obtained by measuring the reference signal.

In another possible design, the receiving unit may be further configured to receive the reference signal in a specific on-duration, where at least one specific on-duration is in the non-active time in the DRX state.

In a possible design, the specific on-duration occurs periodically at specified time intervals.

In a possible design, a cycle in which the specific on-duration occurs is P times a DRX cycle, where P is a positive integer.

In a possible design, the specific on-duration is the on-duration of the first DRX cycle after the UE sleeps for the M consecutive DRX cycles.

In a possible design, the transmission unit may be further configured to report a measurement result to the network side in the specific on-duration.

In a possible design, the DRX cycle is a long DRX cycle or a short DRX cycle.

In a possible design, the processing unit may be further configured to determine a reporting resource; and the transmission unit may be further configured to report the measurement result on the reporting resource to the network side, where the measurement result is obtained by measuring the reference signal. The reporting resource may include at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released.

According to a fourth aspect, an embodiment of the present invention provides a communications apparatus, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

In a possible design, the apparatus includes: a processing unit, which may be configured to determine a reference signal resource; and a transmission unit, which may be configured to transmit a reference signal based on the reference signal resource in a non-active time non-active time in a discontinuous reception DRX state.

In a possible design, the transmission unit is specifically configured to transmit the reference signal in a first time period before an on-duration on-duration in the DRX state.

In a possible design, the first time period occurs periodically at specified time intervals, and a cycle in which the first time period occurs is N times a DRX cycle or a WUS cycle, where N is a positive integer.

In a possible design, the transmission unit is specifically configured to transmit the reference signal in a first time period before an on-duration of a first DRX cycle after the UE sleeps for M consecutive DRX cycles, where M is an integer greater than or equal to 0.

In a possible design, the first time period is before the on-duration and after a wake-up signal WUS detection time corresponding to the on-duration; or the first time period is before a WUS detection time corresponding to the on-duration.

In a possible design, the reference signal resource includes: X reference signal resources before or after the WUS detection occasion corresponding to the on-duration, where X is a positive integer.

In a possible design, the X reference signal resources are before the WUS detection occasion corresponding to the on-duration, and a time interval between an end time of at least one of the X reference signal resources and a start time of the WUS detection occasion is greater than or equal to a first threshold; or the X reference signal resources are after the WUS detection occasion corresponding to the on-duration, and a time interval between a start time of at least one of the X reference signal resources and an end time of the WUS detection occasion is greater than or equal to a second threshold; or the X reference signal resources are before the on-duration, and a time interval between an end time of at least one of the X reference signal resources and a start time of the on-duration is greater than or equal to a third threshold.

In a possible design, the apparatus may further include a receiving unit, configured to: receive a measurement result before the on-duration or in the on-duration, where the measurement result is obtained by the UE by measuring the reference signal; or after it is determined that a WUS signal indicates wake-up of the UE in an on-duration corresponding to the WUS signal, receive a measurement result before the on-duration corresponding to the WUS signal or in the on-duration corresponding to the WUS signal, where the measurement result is obtained by the UE by measuring the reference signal; or receive a measurement result before the on-duration of the first DRX cycle or in the on-duration of the first DRX cycle after the UE sleeps for the M consecutive DRX cycles, where the measurement result is obtained by the UE by measuring the reference signal.

In a possible design, the transmission unit may be further configured to transmit the reference signal in a specific on-duration, where at least one specific on-duration is in the non-active time in the DRX state.

In a possible design, the specific on-duration occurs periodically at specified time intervals.

In a possible design, a cycle in which the specific on-duration occurs is P times a DRX cycle, where P is a positive integer.

In a possible design, the specific on-duration is the on-duration of the first DRX cycle after the UE sleeps for the M consecutive DRX cycles.

In a possible design, the receiving unit is further configured to receive, in the specific on-duration, a measurement result reported by the UE.

In a possible design, the DRX cycle is a long DRX cycle or a short DRX cycle.

In a possible design, the processing unit is further configured to determine a reporting resource; and the receiving unit is configured to receive the measurement result on the reporting resource, where the measurement result is obtained by measuring the reference signal. The reporting resource includes at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released.

According to a fifth aspect, a communications apparatus is provided, where the communications apparatus is, for example, user equipment UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

In a possible design, a specific structure of the communications apparatus may include a processor, and optionally, may further include a transceiver. The processor and the transceiver may perform corresponding functions in the method provided by the first aspect or any possible design of the first aspect.

According to a sixth aspect, a communications apparatus is provided, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

In a possible design, a specific structure of the communications apparatus may include a processor, and optionally, may further include a transceiver. The processor and the transceiver may perform corresponding functions in the method provided by the second aspect or any possible design of the second aspect.

According to a seventh aspect, a communications apparatus is provided, where the communications apparatus is, for example, user equipment UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

In a possible design, a specific structure of the communications apparatus may include a memory, configured to store a computer program; and a processor, configured to execute the computer program stored in the memory, so that the apparatus performs corresponding functions in the method provided by the first aspect or any possible design of the first aspect.

According to an eighth aspect, a communications apparatus is provided, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

In a possible design, a specific structure of the communications apparatus may include a memory, configured to store a computer program; and a processor, configured to execute the computer program stored in the memory, so that the apparatus performs corresponding functions in the method provided by the second aspect or any possible design of the second aspect.

According to a ninth aspect, a computer readable storage medium is provided and includes a program or an instruction, where when the program or the instruction is run on a computer, the method provided by the first aspect or any possible design of the first aspect is performed.

According to a tenth aspect, a computer readable storage medium is provided and includes a program or an instruction, where when the program or the instruction is run on a computer, the method provided by any possible design of the second aspect is performed.

According to an eleventh aspect, a chip is provided, where the chip is coupled to a memory, and configured to read and execute a program instruction stored in the memory to implement the method provided by the first aspect or any possible design of the first aspect.

According to a twelfth aspect, a chip is provided, where the chip is coupled to a memory, and configured to read and execute a program instruction stored in the memory to implement the method provided by the second aspect or any possible design of the second aspect.

According to a thirteenth aspect, a computer program product including an instruction is provided, where the instruction is stored in the computer program product, and when the computer program product is run on a computer, the computer is enabled to perform the method provided by the first aspect or any possible design of the first aspect.

According to a fourteenth aspect, a computer program product including an instruction is provided, where the instruction is stored in the computer program product, and when the computer program product is run on a computer, the computer is enabled to perform the method provided by the second aspect or any possible design of the second aspect.

## BRIEF DESCRIPTION OF DRAWINGS

FIG. 1 is a schematic diagram of a UE status after DRX is configured;
FIG. 2 is a schematic diagram of a position for starting or restarting a DRX-inactivity timer;
FIG. 3 is a schematic diagram in which a WUS indicates wake-up of UE in an on-duration of a DRX cycle;
FIG. 4A is a flowchart of a signal measurement method according to an embodiment of the present invention;
FIG. 4B is a flowchart of another signal measurement method according to an embodiment of the present invention;
FIG. 5 is a schematic diagram of a possible implementation of a first time period according to an embodiment of the present invention;
FIG. 6A, FIG. 6B, FIG. 6C, and FIG. 6D are schematic diagrams of four possible position relationships between a first time period and a WUS detection occasion according to an embodiment of the present invention;
FIG. 7 is a schematic diagram of another possible implementation of a first time period according to an embodiment of the present invention;
FIG. 8 is a schematic diagram of another possible implementation of a first time period according to an embodiment of the present invention;
FIG. 9 is a schematic diagram in which a reference signal is an aperiodic reference signal according to an embodiment of the present invention;
FIG. 10 is a schematic diagram of a possible reference signal resource according to an embodiment of the present invention;
FIG. 11 is a schematic diagram of a window configured according to an embodiment of the present invention;
FIG. 12 is a schematic diagram of another possible reference signal resource according to an embodiment of the present invention;
FIG. 13A is a flowchart of another signal measurement method according to an embodiment of the present invention;
FIG. 13B is a flowchart of another signal measurement method according to an embodiment of the present invention;
FIG. 14 is a schematic diagram of a possible on-duration according to an embodiment of the present invention;
FIG. 15 is a schematic diagram of another possible on-duration according to an embodiment of the present invention;
FIG. 16 is a schematic structural diagram of a communications apparatus according to an embodiment of the present invention;
FIG. 17 is a schematic structural diagram of another communications apparatus according to an embodiment of the present invention;
FIG. 18 is a schematic structural diagram of another communications apparatus according to an embodiment of the present invention;
FIG. 19 is a schematic structural diagram of another communications apparatus according to an embodiment of the present invention;
FIG. 20 is a schematic structural diagram of another communications apparatus according to an embodiment of the present invention; and
FIG. 21 is a schematic structural diagram of another communications apparatus according to an embodiment of the present invention.

## DESCRIPTION OF EMBODIMENTS

To make the objectives, technical solutions, and advantages of the embodiments of the present invention clearer, the following further describes the embodiments of the present invention in detail with reference to the accompanying drawings.

To make the embodiments of the present invention comprehensible, the following describes application scenarios of this application.

Currently, the 3rd Generation Partnership Project (3rd Generation Partnership Project, 3GPP) standardization organization is developing 5th Generation cellular mobile communications system (5th generation, 5G) protocol standards. 5G is also referred to as new radio (New Radio, NR). In comparison with a long term evolution (Long Term Evolution, LTE) system, NR supports a larger transmission bandwidth, more transmit-receive antenna arrays, a higher transmission rate, and a more flexible scheduling mechanism with a smaller granularity. Although NR provides wider application scopes based on the foregoing features, load of power consumption of a terminal device is greatly increased. To reduce power consumption of a terminal device, the 3GPP introduces a power saving (Power saving) research subject in new radio (new radio, NR) release 16 (Release-16). A purpose of the research subject is to work out a solution to reducing power consumption of terminal devices in various states (including a connected (connection) state, an idle state, and an inactive state). How to reduce power consumption of a terminal device in a connected state is a research focus.

Currently, a possible solution to reducing power consumption of a terminal device in a connected state is: for user equipment (user equipment, UE) in a radio resource control (radio Resource control, RRC) connected state, configuring connected-discontinuous reception (connected-discontinuous reception, C-DRX), that is, C-DRX (Connected-Discontinuous Reception), also referred to as discontinuous reception for short in this specification. A purpose is to enable the UE to enter a DRX on-duration (on-duration) at regular intervals to monitor a physical downlink control channel (physical downlink control channel, PDCCH), but enter a sleep state at other times without monitoring the PDCCH, so that power consumption of the UE is reduced.

When the UE is configured with DRX, a status of the UE may be classified into a discontinuous reception active state or active state (DRX active) and a discontinuous reception inactive or non-active (DRX non-active) state. A time in which the UE is in the DRX active state is referred to as a DRX active time or active time (DRX active time). A time in which the UE is in the DRX non-active state is referred to as a DRX inactive time or non-active time (DRX non-active time). When the UE is in the DRX active time, the UE continuously monitors the PDCCH. If the UE leaves the DRX active state, that is, the UE enters the sleep state (DRX non-active), the UE does not monitor the PDCCH. When any one of the following timers runs, the UE is in the DRX active time: a DRX-onduration timer (DRX-on durationTimer), a DRX-inactivity timer (DRX-inactivity timer), a DRX downlink retransmission timer (DRX-retransmission timer DL), a DRX uplink retransmission timer (DRX-retransmission timerUL), and a random access contention resolution timer (RA-contention resolutiontimer). In addition, the DRX active time may further include other cases, for example, a waiting duration after the UE transmits a scheduling request (scheduling request, SR) on a PUCCH, and a PDCCH duration in which no new transmission indicator is received after the UE successfully receives a random access response (random access response, RAR) in non-contention based (non-contention based) random access.

It should be understood that when the UE is in the DRX active time, the UE continuously monitors the PDCCH. If the UE is outside the DRX active time, the UE does not monitor the PDCCH, that is, the UE does not monitor the PDCCH in the non-active time.

Specifically, a cyclic redundancy check (cyclic redundancy check, CRC) of the PDCCH may be scrambled by one of the following radio network temporary identifiers (radio network temporary identifier, RNTI): a cell radio network temporary identifier (cell RNTI, C-RNTI), a configured scheduling radio network temporary identifier (Configured Scheduling RNTI, CS-RNTI), an interruption radio network temporary identifier (Interruption RNTI, INT-RNTI), a slot format indication radio network temporary identifier (Slot Format Indication RNTI, SFI-RNTI), a semi-persistent channel state information radio network temporary identifier (Semi-Persistent CSI RNTI, SP-CSI-RNTI), a transmit power control PUCCH radio network temporary identifier (transmit power control-PUCCH-RNTI, TPC-PUCCH-RNTI), a transmit power control PUSCH radio network temporary identifier (transmit power control-PUSCH-RNTI, TPC-PUSCH-RNTI), and a transmit power control SRS radio network temporary identifier (transmit power control-SRS-RNTI, TPC-SRS-RNTI).

The UE does not monitor the PDCCH in the non-active time. However, the UE still monitors another PDCCH. The another PDCCH may be scrambled by one of the following radio network temporary identifiers (radio network temporary identifier, RNTI): a power saving RNTI (power saving RNTI, PS-RNTI), a system information RNTI (system information RNTI, SI-RNTI), a paging RNTI (Paging RNTI, P-RNTI), a random access RNTI (random access RNTI, RA-RNTI), a temporary C-RNTI (Temporary C-RNTI, TC-RNTI), and the like.

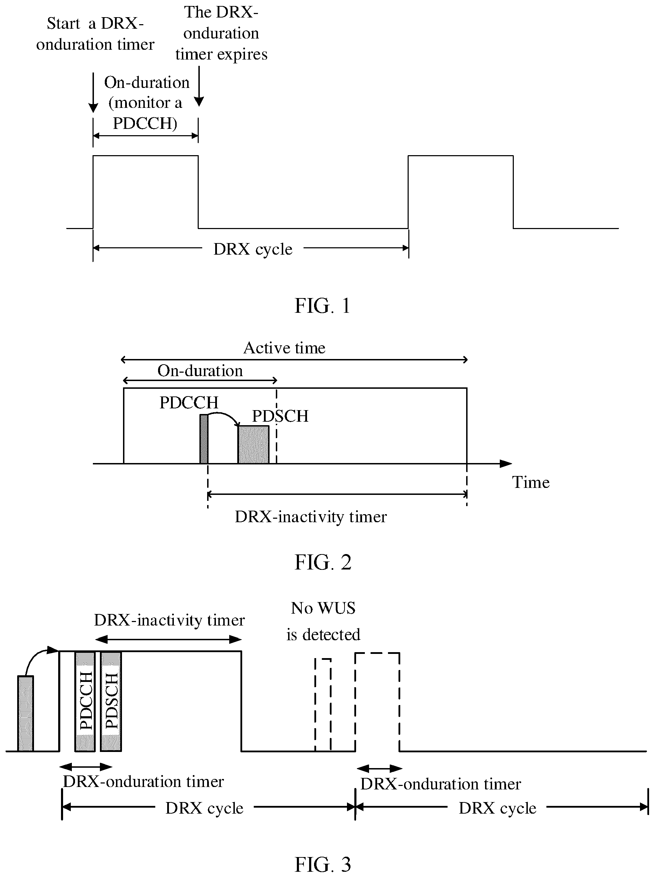

FIG. 1 presents an example of the UE status after DRX is configured. At a start time of a DRX cycle, the UE first enters an on-duration, starts the DRX-onduration timer, and enters the DRX active state. If the UE receives, during the on-duration, a PDCCH indicating new downlink or uplink data transmission, the UE starts (or restarts) the DRX-inactivity timer. The UE is always in the DRX active state until the DRX-inactivity timer expires, or the DRX-inactivity timer is stopped in advance because the UE receives related medium access control (medium access control, MAC) control element (control element, CE) signaling. In the prior art, the DRX-inactivity timer is started or restarted within a first symbol after the PDCCH indicating new data transmission. For example, as shown in FIG. 2, the PDCCH in the figure schedules new PDSCH transmission.

In the UE power saving research subject, a new power saving signal (power saving signal) is also introduced. Currently, it is generally considered that the power saving signal is transmitted before an on-duration and indicates whether the UE needs to be woken up in one or more subsequent DRX cycles to monitor the PDCCH. The power saving signal is based on the PDCCH.

Based on different functions, power saving signals are classified into wake-up (wake-up, WUS) signals and go-to-sleep (go-to-sleep, GTS) signals. (1) If a power saving signal indicates a wake-up (wake-up) function, it represents a wake-up signal (wake-up signal, WUS), also referred to as a PDCCH-based wake-up signal (PDCCH-based wake-up signal, PDCCH-WUS), and the UE may determine, based on whether the WUS is detected, whether the UE is to be woken up in a corresponding on-duration to enter the active state. As shown in FIG. 3, if the WUS is detected, the UE starts the DRX-onduration timer, and is woken up in the on-duration of the DRX cycle, to enter the active state and monitor the PDCCH. If the WUS is not detected, the UE does not start the DRX-onduration timer, that is, the UE does not need to be woken up in the DRX cycle, but enters the sleep state to reduce power consumption. (2) If a power saving signal indicates a go-to-sleep (go-to-sleep) function, it represents a go-to-sleep signal (go-to-sleep signal, GTS signal), also referred to as a PDCCH-based go-to-sleep signal (PDCCH-based go-to-sleep signal, PDCCH-GTS signal). In this case, when the UE detects the GTS signal, the UE does not start the DRX-onduration timer, and therefore enters or remains in the sleep state. When the GTS signal is not detected, the UE starts the DRX-onduration timer by default, to enter the active state and monitor the PDCCH. (3) In addition, a power saving signal may indicate both a wake-up function and a go-to-sleep function. For example, a 1-bit (bit) indicator field in DCI indicates wake-up of the UE to enter the on-duration and monitor the PDCCH, or indicate non wake-up of the UE. For example, a value "0" of the indicator field indicates non wake-up of the UE, and a value "1" of the indicator field indicates wake-up of the UE.

Currently, during a discussion in a standards meeting, it has been agreed that a PDCCH-based power saving signal before an on-duration has a wake-up function, that is, the signal is a PDCCH-WUS. If the PDCCH-WUS indicates wake-up of the UE, the UE starts the DRX-onduration timer when an on-duration corresponding to the PDCCH-WUS arrives, to enter the active state and monitor the PDCCH; otherwise, the UE does not start the DRX-onduration timer, that is, the UE does not enter the active state and does not monitor the PDCCH (herein, it is assumed that there is no other reason for the UE to be in the active state).

It should be noted that how the PDCCH-WUS indicates wake-up of the UE is not limited in the embodiments of the present invention. For example, based on whether the signal is detected, whether to wake up the UE to monitor the PDCCH can be determined; or whether to wake up the UE to monitor the PDCCH can be determined based on an indication of a corresponding information field in PDCCH-WUS DCI.

In NR, a network device configures a downlink reference signal, and UE can perform signal measurement based on the reference signal. The reference signal may be measured for a plurality of purposes, for example, for channel quality (channel quality) measurement, or for beam management (beam management), or for time-frequency tracking (time-frequency tracking), or for mobility management (for example, radio resource management (radio resource management, RRM)). The UE may feed back a measurement result to the network device for some measurement purposes, for example, report channel state information (channel state information, CSI).

The NR protocol TS 38.214 specifies "If the UE is configured with DRX, the most recent CSI measurement occasion occurs in DRX active time for CSI to be reported." To be specific, if the UE is configured with DRX, a measurement occasion for CSI reporting (that is, an occasion for measuring a reference signal) needs to be in the DRX active time. In other words, if the reference signal is not in the DRX active time, the UE does not need to measure the reference signal because the UE does not need to report a reference signal measurement result. In addition, the NR protocol TS 38.321 specifies that for periodic CSI reporting and semi-persistent CSI reporting, if the UE is outside the DRX active time 4 ms before a reporting symbol, the UE does not report CSI. If a CSI mask (CSI-Mask) is set, and the drx-onDurationTimer does not run 4 ms before the reporting symbol, the UE does not report CSI on the PUCCH (including periodic reporting on the PUCCH and semi-persistent reporting on the PUCCH).

According to the foregoing description about the WUS, if each wake-up signal WUS in a plurality of consecutive DRX cycles indicates non wake-up of the UE, the UE does not start the DRX-onduration timer in the plurality of consecutive DRX cycles, and the UE is outside the active time for a long time. In this case, the UE does not perform CSI measurement and reporting for a long time. Because the UE does not perform CSI measurement and reporting for a long time, the base station cannot receive CSI from the UE for a long time, and there are the following problems:

(1) Because the base station cannot receive CSI from the UE for a long time, the base station cannot obtain accurate CSI, and PDCCH-WUS reliability is severely affected.
(2) After the UE is woken up from long sleep, CSI first reported by the UE is a measurement result of CSI in a previous active time, but a time interval between the previous active time and a current reporting occasion is relatively long. Therefore, the CSI may be inaccurate, and performance of the UE is relatively poor in a time period after the UE is woken up.
(3) For a beam management (beam management) scenario, if the UE does not report CSI for a long time, the base station cannot update a transmit beam (beam). As a result, a beam failure (beam failure) is caused, the UE is further triggered to perform beam failure recovery (beam failure recovery, BFR), and power consumption of the UE is increased. This is contrary to a power saving purpose.

Therefore, it can be seen that reference signal measurement and reporting can be performed only in the DRX active time in the prior art, and there are technical problems such as poor reliability of signal measurement and high power consumption. In view of this, the embodiments of the present invention provide a signal measurement method. The method is used to enable UE to perform reference signal measurement and reporting when the UE is in a non-active time; or UE still reports CSI in an active time, but reference signal measurement for CSI reporting may be performed in a non-active time. Therefore, an accurate reference signal measurement result can be obtained in time even if the UE is in long sleep or after the UE is woken up from long sleep. Further, PDCCH-WUS reliability and performance of the UE woken up from long sleep are ensured. In addition, a CSI failure caused by non-reporting of CSI by the UE for a long time can also be avoided, and power consumption of the UE is reduced. Specific implementation solutions are described in detail later.

To make the embodiments of the present invention clearer, the following centrally describes some content and concepts related to the embodiments of the present invention.

(1) A terminal device may be a device that provides a user with voice and/or data connectivity, for example, may be a handheld device with a wireless connection function, or a processing device connected to a wireless modem. The terminal device can communicate with a core network by using a radio access network (radio access network, RAN), and exchange voice and/or data with the RAN. The terminal device may include user equipment (user equipment, UE), a wireless terminal device, a mobile terminal device, a device-to-device communications (device-to-device, D2D) terminal device, a V2X terminal device, a machine-to-machine or machine-type communications (machine-to-machine or machine-type communications, M2M/MTC) terminal device, an Internet of Things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone, a computer equipped with a mobile terminal device, or a portable, pocket-sized, handheld, or computer built-in mobile apparatus. For example, the terminal device may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a low-power device, or a device with a limited storage capability, or a device with a limited computing capability, or the like. For example, the terminal device includes an information sensing device such as a barcode scanner, radio frequency identification (radio frequency identification, RFID) scanner, a sensor, a global positioning system (global positioning system, GPS) scanner, or a laser scanner.

As an example rather than a limitation, in the embodiments of the present invention, the terminal device may alternatively be a wearable device. The wearable device may also be referred to as a wearable intelligent device, an intelligent wearable device, or the like, and is a collective term for wearable devices that are intelligently designed and developed for daily wear by applying a wearable technology, such as glasses, gloves, watches, clothes, and shoes. The wearable device is a portable device that is directly worn on a body or integrated into a user's clothes or accessories. The wearable device is not merely a hardware device. It implements powerful functions through software support, data interaction, and cloud interaction. In a broad sense, wearable devices include those having complete functions and large sizes and capable of implementing complete or partial functions independently of smartphones, for example, smartwatches or smart glasses, and those that are dedicated to a particular type of application function and need to be used with other devices such as smartphones, for example, various smart bands for physical sign detection, smart helmets, and smart headwear.

Various terminal devices described above may all be considered as vehicular terminal devices if they are located in vehicles (for example, placed in the vehicles or mounted in the vehicles). For example, the vehicular terminal devices are also referred to as on-board units (on-board unit, OBU).

(2) A network device includes, for example, an access network (access network, AN) device or a radio access network device (radio access network, RAN) device. The access network device, for example, a base station (for example, an access point), may be a device that communicates with a wireless terminal device over an air interface by using one or more cells in an access network. The base station may be configured to mutually convert a received over-the-air frame and an internet protocol (IP) packet and serve as a router between the terminal device and a rest portion of the access network, where the rest portion of the access network may include an IP network. The network device may coordinate attribute management of the air interface. For example, the network device may include an evolved base station (NodeB or eNB or e-NodeB, evolved NodeB) in a long term evolution (long term evolution, LTE) system or a long term evolution-advanced (long term evolution-advanced, LTE-A) system, or may include a next generation NodeB (next generation nodeB, gNB), a next generation evolved base station (next generation evolved nodeB, ng-eNB), or an enhanced next generation base station en-gNB (enhanced next generation nodeB, gNB) in a 5th Generation mobile communications technology (the 5th generation, 5G) new radio (new radio, NR) system. Alternatively, the network device may include a centralized unit (centralized unit, CU) and a distributed unit (distributed unit, DU) in a cloud radio access network (cloud radio access network, Cloud RAN) system, or may further include a relay device. This is not limited in the embodiments of the present invention.

In addition, in the embodiments of the present invention, the network device may further include a core network device. The core network device includes, for example, a network device for processing and forwarding user signaling and data. For example, in a 4G system, a core network device is a mobility management entity (mobility management entity, MME). The MME is a key control node in an access network of an LTE system defined in the 3rd Generation Partnership Project (3rd generation partnership project, 3GPP) protocol. The MME is responsible for positioning of a terminal device in idle mode, a paging process, or the like, including relaying. Simply, the MME is a core network device responsible for signaling processing. Alternatively, for example, in a 5G system, a core network device includes a core network device such as an access management network element, a session management network element, or a user plane gateway. The user plane gateway may be a server that has functions of mobility management, routing, forwarding, and the like with respect to user plane data. The user plane gateway is generally located in a network device, for example, a serving gateway (serving gateway, SGW), or a packet data network gateway (packet data network gateway, PGW), or a user plane function (user plane function, UPF) entity.

(3) A time window is a continuous time period, where the time period has a start time and an end time, and a length of the time window is a length from the start time to the end time. For example, a WUS time window in this application may be several slots before an on-duration.

(4) The terms "system" and "network" may be used interchangeably in the embodiments of this application. The term "at least one" indicates one or more, and the term "a plurality of' indicates two or more. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects. The term "at least one of the following items (pieces)" or an expression similar to the term indicates any combination of the items, and includes a single item (piece) or any combination of a plurality of items (pieces). For example, at least one item (piece) of a, b, or c may indicate: a, b, c, a-b, a-c, b-c, or a-b-c, where a, b, and c may be in a singular or plural form.

In addition, unless otherwise specified, ordinal numbers such as "first" and "second" mentioned in the embodiments of this application are used for distinguishing between a plurality of objects, instead of limiting an order, a time sequence, priorities, or importance of the plurality of objects. For example, a first priority rule and a second priority rule are used only for distinguishing between different rules, and do not represent that the two rules are different in content, priorities, importance, or the like.

In addition, the terms "include" and "have" in the embodiments of this application, claims, and accompanying drawings are not exclusive. For example, a process, a method, a system, a product, or a device including a series of steps or modules is not limited to the listed steps or modules, and may further include steps or modules that are not listed.

The technical solutions in the embodiments of the present invention are applicable to the 5G system. Certainly, the technical solutions in the embodiments of the present invention are also applicable to another communications system, for example, a narrowband Internet of Things (narrow band-internet of things, NB-IoT), a machine type communications (machine type communications, MTC) system, or a future next generation communications system, provided that a communications entity in the communications system is configured with C-DRX and a wake-up signal.

**Embodiment 1**

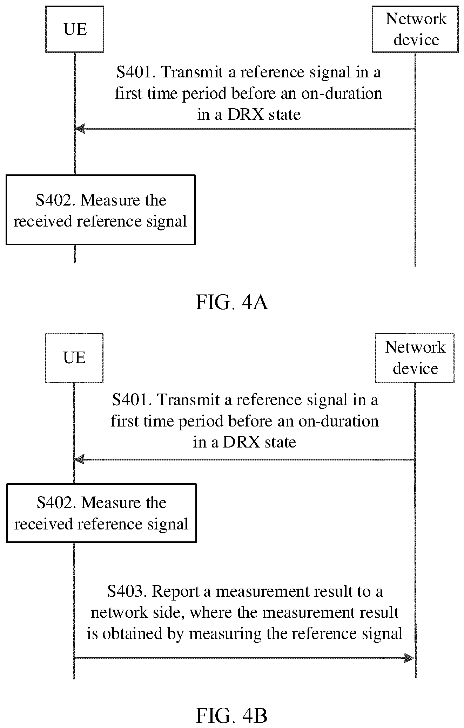

FIG. 4A is a flowchart of a signal measurement method according to this embodiment of the present invention. The method includes the following steps.

S401. A network device transmits a reference signal to UE in a first time period before an on-duration in a DRX state.

In this embodiment of the present invention, that the first time period is before the on-duration means that the first time period is between the on-duration and a previous on-duration adjacent to the on-duration. In a possible implementation, a length of the first time period does not exceed a preset length. In addition, a time interval between the first time period and the on-duration does not exceed a preset threshold. This can ensure that the first time period is between the on-duration and the previous on-duration adjacent to the on-duration, for example, does not overlap the previous on-duration.

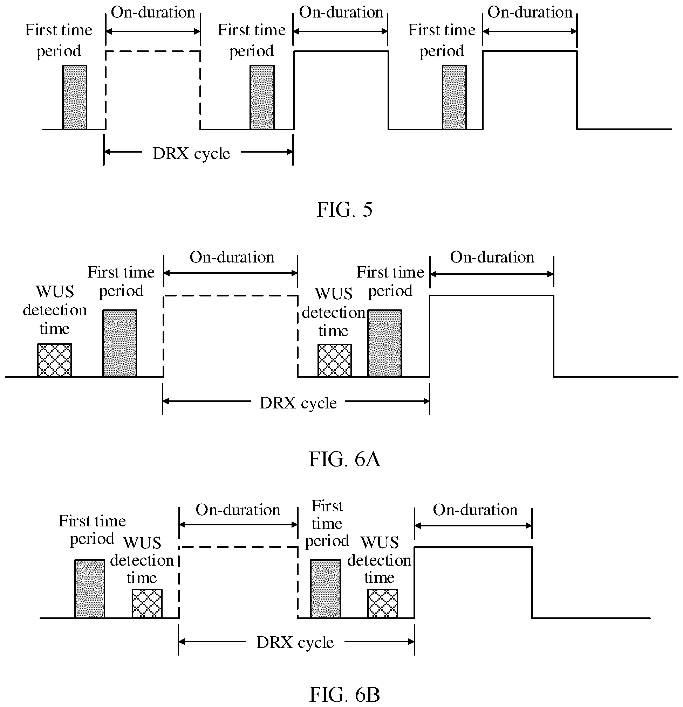

In this embodiment of the present invention, in the on-duration, the UE may be in an active state, or may be in a non-active state. This is not limited herein in this embodiment of the present invention. In the previous on-duration adjacent to the on-duration, the UE may be in the active state, or may be in the non-active state. This is not limited herein in this embodiment of the present invention. For example, referring to FIG. 5, three DRX cycles are shown in FIG. 5. A first time period exists before an on-duration of each of the three DRX cycles. The network device transmits a reference signal to the UE in each first time period, and correspondingly, the UE receives, in each first time period, the reference signal transmitted by the network device. In FIG. 5, a first on-duration is indicated by a dashed line, which represents that the UE has not received a WUS before the first on-duration or that a received WUS indicates non wake-up of the UE when the on-duration arrives; a DRX-onduration timer is not started in the first on-duration; and the UE is in the non-active state in the first on-duration and does not monitor a PDCCH. A second on-duration and a third on-duration are indicated by a solid line, which represents that the UE is in the active state in the second on-duration and the third on-duration and monitors the PDCCH.

In some possible designs, the first time period may occur periodically at specified time intervals. To be specific, the network device transmits the reference signal to the UE periodically at specific time intervals, so that the UE receives, in the first time period corresponding to each cycle, the reference signal transmitted by the network device, and measures the reference signal. In a specific implementation, a cycle in which the first time period occurs is N times a DRX cycle or a WUS cycle, where N is a positive integer. Certainly, other designs may also exist. This is not limited herein in this embodiment of the present invention. Because periodicity of the first time period is designed, it can be ensured that even if the UE is in a long sleep state, the UE can still measure the reference signal periodically and obtain an accurate signal measurement result.

In other possible designs, the first time period may be aperiodic. For example, the first time period may be a time period before an on-duration of a first DRX cycle after the UE sleeps for M consecutive DRX cycles, where M is an integer greater than or equal to 0. Correspondingly, the network device transmits the reference signal in the first time period before the on-duration of the first DRX cycle after the UE sleeps for the M consecutive DRX cycles, so that the UE measures the reference signal in the first time period before the on-duration of the first DRX cycle after the UE sleeps for the M consecutive DRX cycles. In this design, it can also be ensured that after the UE sleeps continuously for a time period, the UE can measure the reference signal in time and obtain an accurate signal measurement result.

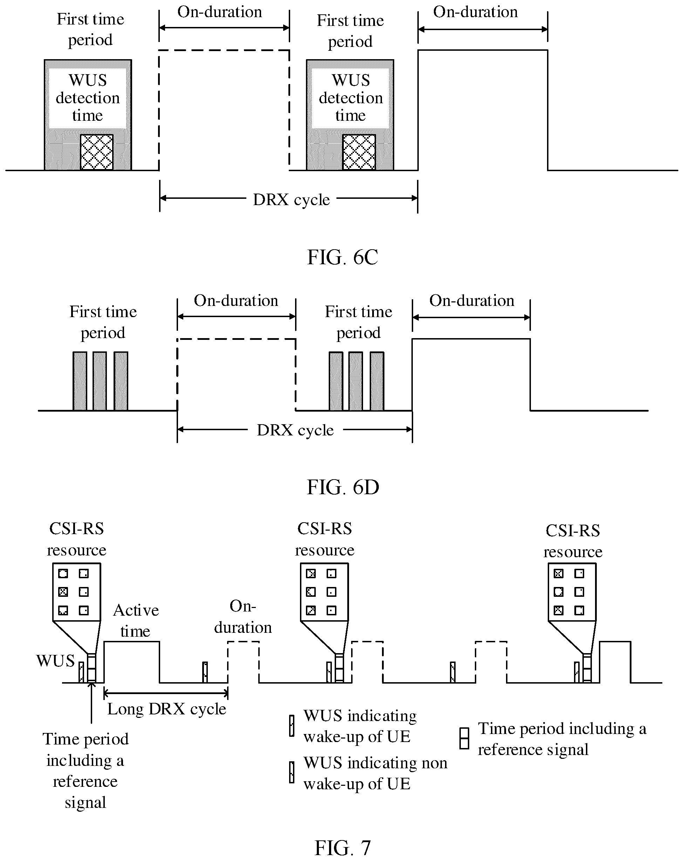

Considering that a WUS detection occasion (or referred to as a WUS monitoring occasion, a WUS receiving occasion, a WUS time window, or the like) also exists before the on-duration in an actual situation, a position relationship between the first time period before the on-duration and the WUS detection occasion includes but is not limited to the following: 1. The first time period is before the on-duration and after the WUS detection time, as shown in FIG. 6A. This can make the first time period nearer to the on-duration, and can further ensure communication performance of the UE after the UE is woken up in the on-duration. 2. The first time period is before the on-duration and before the WUS detection time, as shown in FIG. 6B. This can enable the UE to perform signal measurement, time-frequency synchronization, or signal measurement and reporting even in a non-active time period before a WUS, and further better ensure WUS signal reliability. 3. The first time period at least partially overlaps the WUS detection time. For example, as shown in FIG. 6C, a start time of the first time period is before the WUS detection time, and an end time of the first time period is after the WUS detection time. Certainly, in a specific implementation, other designs may also be performed based on an actual requirement. This is not limited herein in this embodiment of the present invention.

In this embodiment of the present invention, the first time period may be a continuous time period, for example, the time period shown in FIG. 6A, FIG. 6B, or FIG. 6C. The first time period may also be a time period set including a plurality of sub time periods, as shown in FIG. 6D.

In this embodiment of the present invention, before transmitting the reference signal, the network device needs to first determine a reference signal resource, and then transmit the reference signal on the determined reference signal resource; and correspondingly, the UE needs to first determine the reference signal resource, and then receive the reference signal on the reference signal resource. The UE may determine the reference signal resource based on signaling delivered by the network device, or determine the reference signal resource based on a preconfigured protocol. This is not specifically limited in this embodiment of the present invention.

The UE determines the reference signal resource based on the signaling delivered by the network device:

Specifically, the network device may transmit the reference signal on an originally configured reference signal resource, and the network device indicates the first time period to the UE by delivering signaling. Correspondingly, after the UE determines the first time period based on the configuration or indication of the network device, the UE receives the reference signal on the configured reference signal resource in the first time period, that is, the determined reference signal resource is a configured reference signal resource in the first time period.

In a possible design, the reference signal resource may be associated with the WUS detection occasion (or referred to as a WUS resource).

In a possible association manner, the resource for transmitting the reference signal by the network device is X reference signal resources before or after the WUS detection occasion corresponding to the on-duration, where X is a positive integer.

For example, the X reference signal resources are before the WUS detection occasion corresponding to the on-duration, and a time interval between an end time of at least one of the X reference signal resources and a start time of the WUS detection occasion is greater than or equal to a first threshold.

For example, the X reference signal resources are after the WUS detection occasion corresponding to the on-duration, and a time interval between a start time of at least one of the X reference signal resources and an end time of the WUS detection occasion is greater than or equal to a second threshold.

For example, the X reference signal resources are before the on-duration, and a time interval between an end time of at least one of the X reference signal resources and a start time of the on-duration is greater than or equal to a third threshold.

The first threshold, the second threshold, and the third threshold may be preconfigured or specified in advance, and any two of the first threshold, the second threshold, and the third threshold may be equal or unequal. This is not limited herein. The first threshold may be related to at least one of the following factors: a reference signal processing and calculation time, a time-frequency tracking processing time, a receive-end beam selection time, or a CSI reporting time. The second threshold is related to at least one of the following factors: a PDCCH-WUS demodulation, decoding, and parsing time, or a WUS DCI parsing time. The third threshold is related to at least one of the following factors: a reference signal processing and calculation time, or a CSI processing time (CSI calculation time).

It should be understood that if X is greater than 1, the X reference signal resources may be discontinuous. In this case, a start time of the X reference signal resources is a start time of the first one of the X reference signal resources, and an end time of the X reference signal resources is an end time of the $X^{th}$ one of the X reference signal resources.

In another possible design, the network device directly configures for the UE or indicates to the UE, the reference signal resource for transmitting the reference signal, where a time domain position of the reference signal resource is a position of the first time period. Therefore, the network device may not need to inform the UE of the first time period, and the UE directly receives the reference signal on the reference signal resource after the UE determines the reference signal resource.

The UE determines the reference signal resource based on the preconfigured protocol:

Specifically, the network device may transmit the reference signal on the originally configured reference signal resource, and determine the first time period based on the preconfigured protocol; and correspondingly, after the UE determines the first time period based on the preconfigured protocol, the UE receives the reference signal on the configured reference signal resource in the first time period. For example, the first time period determined based on the preconfigured protocol is a time period between the WUS detection occasion and the on-duration.

Assuming that the reference signal is a CSI-RS, the following describes the reference signal and the reference signal resource in detail (in the following description, unless otherwise particularly specified, the reference signal refers to the CSI-RS).

1. A purpose of the reference signal includes but is not limited to the following: The reference signal is used for channel quality (channel quality) measurement, for beam management (beam management) measurement, for time-frequency tracking (time-frequency tracking) measurement, for mobility management measurement, or the like.

The reference signal is used for channel quality measurement, where channel quality includes but is not limited to a channel quality indicator (channel quality indicator, CQI), a precoding matrix indicator (Precoding matrix indicator, PMI), a rank indicator (rank indicator, RI), a CSI-RS resource indicator (CSI-RS Resource indicator, CRI), a layer indicator (layer indicator, LI).

That the reference signal is used for beam management may be that the UE calculates LI-RSRP based on the reference signal.

That the reference signal is used for time-frequency tracking may be that the reference signal is functionally set as a tracking reference signal (tracking reference signal, TRS). The time-frequency tracking may also be referred to as time-frequency synchronization. The UE receives a downlink reference signal to perform time-frequency synchronization, to avoid that offsets between a clock and working frequency of the system and those of the network device are caused by long dormancy of the UE.

That the reference signal is used for mobility management may be that the reference signal is used for radio resource management (radio resource management, RRM).

Generally, the network device indicates a purpose of an associated reference signal resource by configuring a report quantity (report quantity) in a CSI report configuration (CSI-ReportConfig). For example, if the report quantity is set to at least one of CQI/PMI/RI/CRI/LI, it indicates that the associated reference signal resource is used for channel quality measurement. If the report quantity is set to LI-RSRP (for example, set to cri-RSRP or ssb-Index-RSRP), it indicates that the associated reference signal resource is used for beam management.

In addition, for time-frequency tracking and receive-end beam selection, because the UE does not need to report a measurement result, the network device sets the report quantity to non-reporting (the report quantity is set to NULL). In addition, when the network device configures the reference signal resource, the network device adds some parameters in a reference signal resource configuration IE to indicate that the configured reference signal resource is used for time-frequency tracking or beam management. For example, a trs-Info parameter and a repetition parameter are included in a configuration of an NZP-CSI-RS-ResourceSet IE. If trs-Info is set to true (true), it indicates that the reference signal resource is used for time-frequency tracking. The repetition parameter may be set to on (on) or off (off). If the repetition parameter is set to on (on), it indicates that reference signals transmitted on all reference signal resources in a resource set configured by the NZP-CSI-RS-ResourceSet IE use a same downlink spatial domain transmission filter and a same port number. When the repetition parameter corresponding to the reference signal resource is set to on, and the corresponding report quantity is set to NULL, an actual purpose of the reference signal resource is receive-end beam selection.

In addition, when repetition is set to on for the reference signal resource, the report quantity in the corresponding report configuration is set to L1-RSRP, that is, the UE performs receive-end beam measurement and selection and also needs to report a measurement result.

In addition, for mobility management, the network device configures, by using signaling independent of that used for CQI measurement, beam management, or time-frequency tracking, a reference signal resource used for mobility management. For example, the network device configures, by using CSI-ResourceConfig signaling, a reference signal resource used for CQI measurement, beam management, or time-frequency tracking, and configures, by using CSI-RS-ResourceConfigMobility signaling, the reference signal resource used for mobility management.

It should be noted that "CQI measurement" or "measuring the CQI" hereinafter indicates channel quality measurement, where a purpose of the channel quality measurement is to obtain at least one of the following measurement parameters: CQI/PMI/RI/CRI/LI. It should be noted that "CSI measurement" or "measuring the CSI" hereinafter indicates CQI measurement or beam measurement.

2. Time domain features of the reference signal include but are not limited to the following two implementations:

Manner 1: Having a fixed cycle

First, a cycle of the reference signal is defined, and the network device transmits the reference signal on the reference signal resource. If one or more reference signal resources exist before one on-duration, a time period is defined, the time period is before the on-duration (and after a previous on-duration), and the time period includes the one or more reference signal resources before the on-duration (and after the previous on-duration). In this case, the cycle of the reference signal is equal to a time interval between a start time (or an end time) of the time period and that of an adjacent time period. In the following description, the time period is referred to as the first time period.

In a possible design, the cycle of the first time period may be N times a C-DRX cycle or a WUS cycle (N ≥ 1).

Likewise, the WUS cycle is first defined. Because one or more WUS monitoring occasions exist before the on-duration, a time period is defined, and the time period includes the one or more WUS monitoring occasions before the on-duration (and after the previous on-duration). In this case, the WUS cycle is equal to a time interval between a start time (or an end time) of the time period and that of an adjacent time period. Note: It is assumed that a short DRX cycle is not considered herein.

In a specific implementation, the WUS cycle may be equal to the C-DRX cycle, that is, a WUS monitoring occasion exists before every on-duration. Alternatively, the WUS cycle may be longer than the C-DRX cycle, for example, may be an integer multiple of the C-DRX cycle. For example, a WUS monitoring occasion exists before an on-duration at intervals of one on-duration only, and the WUS indicates wake-up or non wake-up in both of two subsequent DRX cycles. The C-DRX cycle is a long DRX cycle.

When N = 1, it indicates that the CSI-RS exists before every on-duration. Regardless of whether the WUS indicates wake-up of the UE to monitor the PDCCH, that is, regardless of whether the UE starts the DRX-onduration timer, the UE can measure the CSI-RS.

When N > 1, it indicates that the network device does not transmit the CSI-RS before every on-duration; instead, the network device transmits the CSI-RS before an on-duration at intervals of N-1 on-durations only. Therefore, resources of the network device can be saved, and power consumption of the network device can be reduced. Even if the WUS indicates non wake-up of the UE, the UE does not need to perform measurement before every on-duration; instead, the UE measures the reference signal before an on-duration at intervals of N-1 on-durations only. This manner is more suitable for a scenario in which a channel state changes slowly, for example, the UE is stationary or has low mobility. If the WUS indicates non wake-up of the UE, and the reference signal does not exist before one on-duration, the UE does not perform measurement and can return to a sleep state, so that power consumption of the UE is reduced. Therefore, when N > 1, a good compromise can be achieved between power consumption of the UE and performance of the UE. FIG. 7 shows an example in which N = 2, that is, the cycle of the CSI-RS is twice the C-DRX cycle.

Manner 2: Not having a fixed cycle

In a possible design, after the UE sleeps for the M consecutive DRX cycles, regardless of whether the WUS indicates wake-up of the UE in an (M+1)th DRX cycle (that is, the first DRX cycle after the UE sleeps for the M consecutive DRX cycles) to monitor the PDCCH, the UE assumes that the reference signal resource definitely exists in a time period before an on-duration of the (M+1)th DRX cycle and that the reference signal is definitely transmitted.

In a possible implementation, the UE assumes that the reference signal exists before the on-duration only after the UE sleeps for the M consecutive DRX cycles. When the UE sleeps in the M DRX cycles, the UE does not assume or expect that the reference signal exists. Therefore, the network device, for example, a base station may temporarily not transmit the reference signal, to reduce resource overheads and power consumption of the base station.

The DRX cycle herein may be a long DRX cycle, that is, the UE sleeps for M consecutive long DRX cycles; or the DRX cycle may be a short DRX cycle, that is, the UE sleeps for M consecutive short DRX cycles, where M is an integer greater than or equal to 0.

A value of M may be configured by the network, and configuration signaling may be RRC signaling, MAC CE signaling, or physical layer signaling. This is not limited herein. In addition, a value of M may alternatively be specified by the protocol.

When the WUS indicates wake-up of the UE, the UE starts the DRX-onduration timer and enters an active time, and the UE can perform CSI measurement and CSI reporting in the active time. Therefore, when a plurality of WUSs continuously indicate wake-up of the UE, the network does not need to configure the CSI-RS, and the UE does not need to perform measurement and CSI reporting before an on-duration either. After the UE sleeps for a time period, a channel condition may have changed. In this case, even if the UE does not need to be woken up to transmit or receive data, the UE still needs to perform time-frequency tracking and CSI measurement and then report CSI, so that the network device obtains more accurate CSI in time. This helps improve PDCCH-WUS reliability, so that the network device selects a more suitable transmit beam. Therefore, in this manner, after the UE sleeps for the M consecutive DRX cycles, even if a next WUS still indicates sleep of the UE, the UE needs to measure the CSI before the on-duration. In addition, based on a configuration of the network, the UE determines whether to report a measurement result, that is, whether to report CSI. In addition, after the UE sleeps for the M consecutive DRX cycles, if the next WUS indicates wake-up of the UE, because the UE performs measurement before the on-duration, for example, performs time-frequency tracking, or beam measurement, or CQI measurement, or performs both measurement and CSI reporting, or performs measurement before the on-duration and reports a measurement result in the on-duration, after the UE is woken up, the network device can obtain accurate CSI of the UE in a more timely manner. This helps improve performance of the UE.

It should be understood that "not having a fixed cycle" may also mean that the reference signal resource is aperiodic and is triggered by a specific event. The specific event is that the UE sleeps for the M consecutive DRX cycles. Once the UE determines (detects) that the UE has not been woken up for the M consecutive DRX cycles, the UE assumes that the reference signal resource is transmitted.

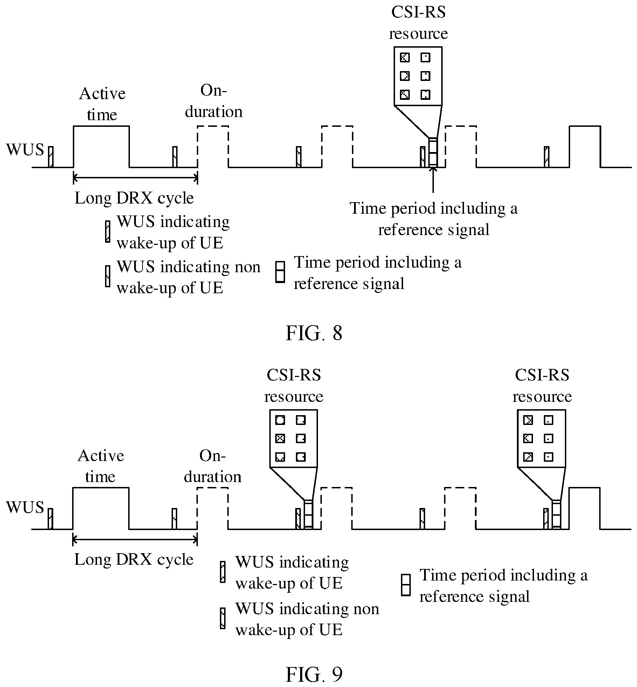

For example, referring to FIG. 8, after the UE sleeps for M = 2 consecutive long DRX cycles, the UE assumes that the reference signal is definitely transmitted in a time period before an on-duration of a subsequent DRX cycle. Correspondingly, a CSI-RS resource exists in a time period before the on-duration of the first DRX cycle after the UE sleeps for the M = 2 consecutive long DRX cycles.

In the (M+1)$^{th}$ DRX cycle after the UE sleeps for the M consecutive DRX cycles, if the WUS still indicates non wake-up of the UE, the UE does not start the DRX-onduration timer, but the UE can perform measurement on the reference signal resource before the on-duration of the DRX cycle. Therefore, when the UE and the network device perform counting with respect to the event of "sleeping for the M consecutive DRX cycles", the (M+1)$^{th}$ DRX cycle is not included; instead, counting is restarted from the next DRX cycle, that is, counting is started from 0 from the (M+1)$^{th}$ DRX cycle. FIG. 9 shows an example in which M is equal to 1.

3. Reference signal resource configuration and trigger modes include two categories: explicit modes and implicit modes.

First, the explicit modes are described.

Explicit mode 1: The network device configures a window (which may be understood as the foregoing first time period), and the UE assumes that only the reference signal in the window exists, in addition to those in a DRX active time.

To be specific, the network device configures one or more reference signal resource sets (for example, CSI-RS resource set(s)), where each reference signal resource set includes one or more reference signal resources (CSI-RS resources).

When the UE is in the active time, the reference signal resource configured by the network device is normally transmitted. In addition, if the reference signal resource configured by the network device is exactly located in the window, the UE also assumes that the reference signal resource is transmitted.

If the reference signal resource configured by the network device is located outside the window, and the UE is outside the active time, the UE cannot assume that the reference signal resource definitely exists. In a possible implementation, the network device may not transmit the reference signal resource, to reduce resource overheads.

To be specific, the reference signal resource in the window is the reference signal resource. It may also be understood that the reference signal resource is a part of configured reference signal resources. The network device configures the time domain position of the reference signal resource by configuring the window.

The configured reference signal resource includes:

(1) a periodic CSI-RS;
(2) a semi-persistent CSI-RS, where the UE can assume that the reference signal resource exists in the window only after a semi-persistent CSI-RS resource set is activated by MAC CE signaling, and the reference signal resource does not exist in the window if the semi-persistent CSI-RS resource is deactivated (deactivated); or
(3) both a periodic CSI-RS and a semi-persistent CSI-RS.

The UE assumes that the periodic CSI-RS resource in the window is definitely transmitted.

After the semi-persistent CSI-RS resource is activated by MAC CE signaling, the UE assumes that the semi-persistent CSI-RS resource in the window is definitely transmitted. If the semi-persistent CSI-RS resource is deactivated (deactivated), only the periodic CSI-RS resource exists in the window.

As described above, a cycle of the reference signal resource may be N times the C-DRX cycle. In this case, it may be understood that a cycle of the window is N times the C-DRX cycle.

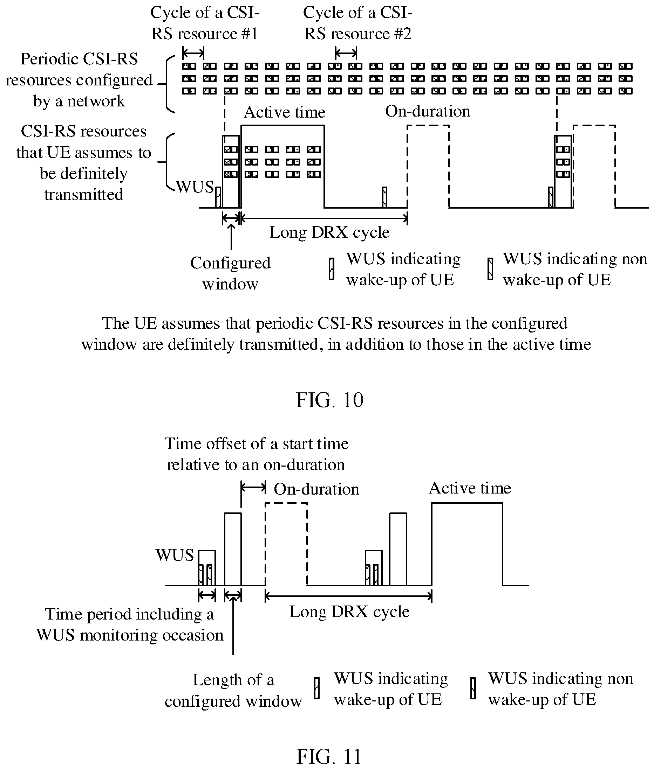

For example, referring to FIG. 10, the network device has configured periodic CSI-RS resources, and the UE assumes that the periodic CSI-RS resources in the configured window are also transmitted, in addition to those in the active time.

In this embodiment of the present invention, window configuration modes include but are not limited to the following modes.

Window configuration mode 1: Configuring parameters such as a length, cycle, and time offset of the window.

For example, the length of the window may be in units of slots, mini-slots, symbols, subframes, milliseconds (ms), or the like. The cycle of the window may be in units of slots, mini-slots, symbols, subframes, milliseconds (ms), seconds (s), or the like. The time offset may be in units of slots, mini-slots, symbols, subframes, milliseconds (ms), or the like.

Units of the time offset and the cycle may be the same.

The configured parameters may include one cycle parameter and one time offset parameter. Alternatively, the configured parameters may include one cycle parameter and a plurality of time offset parameters. This is not limited herein.

When there are a plurality of time offset parameters, units of different time offset parameters may be different. For example, one time offset is in units of subframes and indicates a subframe offset, one time offset is in units of slots and indicates a slot offset, and one time offset is in units of symbols and indicates a symbol offset.

As described above, the cycle of the window may be N times the C-DRX cycle or the WUS cycle (N ≥ 1). The DRX cycle herein may represent a long DRX cycle (long DRX cycle length), or may represent a short DRX cycle (short DRX cycle length).

A time domain position of a start time of each window, for example, a system frame number (SFN, system frame number) of the start time of the window, and a specific subframe or slot or symbol of the start time of the window in a frame, may be calculated based on a predefined rule or a calculation formula by using the cycle and time offset parameters. The following provides two specific examples.

Example 1

The network device configures the cycle and two time offsets of the window. One time offset is a cycle offset, and the other time offset is a slot offset. Units of the cycle offset and the cycle are the same. In this example, the cycle and the cycle offset are both in units of milliseconds (ms).

The cycle is represented by T, the cycle offset is represented by T offset, and the slot offset is represented by T_slotOffset.

In this case, the system frame number (System frame number, SFN) and subframe (subframe) of the start time of the window may be determined based on the following formula:

$$[(\text{SFN} \times 10) + \text{subframe number}] \text{ modulo } T = T\_\text{offset}.$$

Then a specific slot of the start time of the window in the determined subframe may be determined based on the slot offset of the window.

For example, the network device may configure a third time offset in units of symbols. The time offset is a symbol offset, and is marked as T_symbolOffset. Based on the symbol offset, a specific symbol of the start time of the window in the determined slot may be further determined.

Example 2

The network device configures the cycle and one time offset of the window. The cycle and the time offset are both in units of slots (slot).

The cycle is marked as Tl, and the time offset is marked as T1_slotOffset.

In this case, the SFN of the start time of the window and a slot number $n_{s,f}^{\mu}$ of the start time of the window in the determined frame are determined based on the following formula:

$$\left(N_{\text{slot}}^{\text{frame},\mu}\text{SFN} + n_{s,f}^{\mu} - \text{T1\_slotOffset}\right) \text{ modulo } T1 = 0,$$

where $N_{slot}^{frame,\mu}$ indicates a quantity of slots in a frame whose subcarrier spacing (subcarrier spacing, SCS) is $\mu$, and $n_{s,f}^{\mu}$ indicates a slot number in the frame whose SCS is $\mu$.

For example, the network device may configure a second time offset in units of symbols. The time offset is a symbol offset, and is marked as T1_symbolOffset. Based on the symbol offset, a specific symbol of the start time of the window in the determined slot may be further determined.

In this implementation, an effect of configuring any position of the window is achieved, and flexibility of the solution can be improved.

Window configuration mode 2: Configuring parameters such as a length and a relative time offset of the window.

The relative time offset may be a time offset between the start time of the window and a first time domain position, or a time offset between an end time of the window and a first time domain position.

In a possible implementation, the first time domain position is the start time of the on-duration. In another possible implementation, the first time domain position is a WUS monitoring occasion before the on-duration. In still another possible implementation, the first time domain position is a start time or an end time of a time period including a WUS monitoring occasion, before the on-duration.

When the WUS monitoring occasion occupies only one orthogonal frequency division multiplexing (orthogonal frequency division multiplexing, OFDM) symbol, the first time domain position may be a symbol on which the WUS is located, or a start time or an end time of a symbol on which the WUS is located. This is not limited herein.

When the WUS monitoring occasion occupies a plurality of OFDM symbols or occupies a plurality of slots, the first time domain position may be a start symbol of the WUS monitoring occasion, or a start symbol of a slot in which a start symbol of the WUS monitoring occasion is located, or an end symbol of the WUS monitoring occasion, or an end symbol of a slot in which an end symbol of the WUS monitoring occasion is located. This is not limited herein.

For example, FIG. 11 shows an example of a length of a window and a time offset between the window and an on-duration, configured by the network device. In this example, the window is located after a WUS monitoring occasion.

Window configuration mode 3: Configuring one or two time offset parameters.

(1) One time offset parameter is configured, and the window is determined based on the time offset parameter and a preset time domain position.

The start time (or end time) of the window is determined based on the time offset parameter. In this case, the end time (or start time) of the window is the preset time domain position.

An implementation of the preset time domain position is the same as the foregoing implementation of the first time domain position. Details are not described again herein.

Optionally, the time offset is an offset relative to the preset time domain position.

Optionally, the preset time domain position is the start time of the on-duration, that is, the end time of the window is the start time of the on-duration. The time offset is an offset relative to the WUS monitoring occasion, and the start time of the window may be determined based on the offset.

Optionally, the preset time domain position is an end time of the WUS monitoring occasion. The time offset is an offset relative to the start time of the on-duration.

Optionally, the preset time domain position is a start time of the WUS monitoring occasion. The time offset is an offset relative to the start time of the on-duration.

(2) Two time offset parameters are configured, and the window is determined based on the two time offset parameters.

Optionally, the two time offset parameters are offsets relative to a same preset time domain position.

Optionally, the two time offset parameters are offsets relative to different preset time domain positions.

In this embodiment of the present invention a relationship between a long DRX cycle and a short DRX cycle includes but is not limited to the following:

(1) The window exists both before an on-duration of the long DRX cycle and before an on-duration of the short DRX cycle. Therefore, when the UE enters the short DRX cycle, the cycle of the window becomes shorter. It may also be understood that the window does not have a fixed cycle.

In a possible implementation, the window exists only before the on-duration of the long DRX cycle, and the window does not exist before the on-duration of the short DRX cycle.

Optionally, if the on-duration of the short DRX cycle overlaps the on-duration of the long DRX cycle, and a DRX short cycle timer (drx-shortCycleTimer) is running in this case, it indicates that the UE is currently in the short DRX cycle. In this case, it may be specified that the window also exists before the on-duration. Therefore, the window has a fixed cycle, that is, its duration is an integer multiple of a duration of one long DRX cycle.

Optionally, if the on-duration of the short DRX cycle overlaps the on-duration of the long DRX cycle, and the DRX short cycle timer (drx-shortCycleTimer) is running in this case, it indicates that the UE is currently in the short DRX cycle. In this case, it may be specified that the window does not exist before the on-duration. Therefore, the window may not have a fixed cycle. There are some scenarios in which a duration between two adjacent windows is longer than the duration of one long DRX cycle.

The following describes a special explicit indication solution: The UE assumes that X CSI-RS resources after or before a WUS are definitely transmitted. A value of X may be configured or indicated by the network, for example, by using RRC signaling, MAC CE signaling, or physical layer signaling. The value of X may also be predefined by the protocol. X is greater than or equal to 1.

In a possible implementation, the X reference signal resources are before the WUS detection occasion corresponding to the on-duration, and the time interval between the end time of at least one of the X reference signal resources and the start time of the WUS detection occasion is greater than or equal to the first threshold.

In a possible implementation, the X reference signal resources are after the WUS detection occasion corresponding to the on-duration, and the time interval between the start time of at least one of the X reference signal resources and the end time of the WUS detection occasion is greater than or equal to the second threshold. For example, a time interval between a start time (start symbol) of the X CSI-RS resources and the end time (end symbol) of the WUS monitoring occasion is greater than or equal to a specified threshold. Optionally, the specified threshold is 0. Optionally, the specified threshold is greater than or equal to the PDCCH-WUS demodulation, decoding, and parsing time, or the WUS DCI parsing time. To be specific, the UE assumes that X CSI-RS resources after the specified threshold counting from the end time of the WUS monitoring occasion are definitely transmitted. Therefore, the following can be implemented: The UE receives the reference signal and performs reference signal measurement and calculation and reports a measurement result, only after the parsed WUS indicates wake-up of the UE to monitor the PDCCH. If the parsed WUS indicates non wake-up of the UE, the UE may not receive the reference signal, so that power consumption of the UE can be reduced. This function may be configured by the network or predefined by the protocol. Optionally, the UE assumes that a total of X CSI-RS resources counting from a first CSI-RS resource after the WUS monitoring occasion are definitely transmitted.

In a possible implementation, the X reference signal resources are before the on-duration, and the time interval between the end time of at least one of the X reference signal resources and the start time of the on-duration is greater than or equal to the third threshold. For example, a time interval between an end time (end symbol) of at least one of the X CSI-RS resources and the start time of the on-duration is greater than or equal to a specified threshold. Optionally, the specified threshold is 0. Optionally, the specified threshold is greater than or equal to the CSI processing and calculation time. Therefore, the following can be implemented: When a first CSI reporting resource in the on-duration arrives after the UE wakes up, the UE has prepared a measurement result obtained through calculation based on the reference signal resource. This helps the UE quickly report latest CSI and helps improve performance of the UE. Optionally, the UE assumes that a total of X CSI-RS resources counting from a first CSI-RS resource before the start time of the on-duration are definitely transmitted.

It may be understood that herein it is assumed that the reference signal resource has been configured.

In a possible implementation, the configured reference signal resource is a periodic reference signal resource. For example, the network device has configured one or more CSI-RS resource sets whose time domain features are periodic resources.

In a possible implementation, the configured reference signal resource is a semi-persistent (semi-Persistent) reference signal resource that has been activated and has not been deactivated (deactivated).

In a possible implementation, the configured reference signal resource includes a periodic reference signal resource, and a semi-persistent (semi-Persistent) reference signal resource that has been activated and has not been deactivated (deactivated).

In a possible implementation, the reference signal resource includes Y CSI-RS resources, which respectively have different resource numbers, for example, non-zero CSI-RS resource numbers (Non-zero power CSI-RS ResourceID, NZP-CSI-RS-ResourceID). Each CSI-RS resource having a same number is transmitted for X times, that is, X cycles. Optionally, Y = 1, or Y > 1. In a possible implementation, Y = X.

In a possible implementation, the network device may configure or indicate resource numbers corresponding to the Y CSI-RS resources. For example, when a quantity of CSI-RS resources configured for the UE is greater than Y, that is, when the UE has more than Y CSI-RS resource numbers, the network device needs to configure or indicate resource numbers corresponding to the Y CSI-RS resources.

In a possible implementation, the X CSI-RS resources correspond to X different resource numbers, and the CSI-RS resources having different resource numbers are transmitted only once, that is, one cycle.

In a possible implementation, the network device configures or indicates resource numbers corresponding to the X CSI-RS resources.

In a possible implementation, the network device configures or indicates numbers of Z CSI-RS resource sets, which correspond to Z configured CSI-RS resource sets. Each CSI-RS resource in the Z CSI-RS resource sets is transmitted for X times, that is, X cycles.

In a possible implementation, the network device configures or indicates numbers of Z CSI-RS resource sets, and configures or indicates a total of W CSI-RS resources from the Z CSI-RS resource sets, where each of the W CSI-RS resources in the Z CSI-RS resource sets is transmitted for X times, that is, X cycles. For example, in the Z CSI-RS resource sets, Y1, Y2, ..., YZ CSI-RS resources are respectively indicated, where Y1 + Y2 + ... + YZ = W. The network device configures or indicates resource numbers of the W CSI-RS resources respectively. Optionally, Z may be equal to 1 or greater than 1.

In a possible implementation, the network device configures or indicates numbers of X CSI-RS resource sets, which correspond to X configured CSI-RS resource sets. Each CSI-RS resource in the X CSI-RS resource sets is transmitted once, that is, one cycle.

Explicit mode 2: The reference signal resource is not a configured reference signal resource, but is a reference signal resource additionally configured after the WUS is configured.

If the WUS indicates non wake-up of the UE, the UE performs measurement only based on the reference signal resource additionally configured, or performs both measurement and CSI reporting. If the WUS indicates wake-up of the UE, the UE enters the active time, and the reference signal resource used by the UE for measurement in the active time is a reference signal resource that has been configured previously.

In a possible implementation, after the network device configures the reference signal resource, the reference signal resource is transmitted immediately, that is, the reference signal resource is periodic and does not require additional activation signaling.

In another possible implementation, after the network device configures the reference signal resource, the reference signal resource is not transmitted immediately, and the reference signal resource is transmitted only after activation signaling (for example, MAC CE signaling) is received, that is, the reference signal resource is semi-persistent. The network device may deactivate (deactivate) the reference signal resource by using deactivation signaling (for example, MAC CE signaling). After the deactivation, the base station stops transmitting the reference signal resource.

Optionally, the reference signal resource does not have a fixed cycle, and transmission of the reference signal resource is triggered by a specific event. The specific event is that the UE sleeps for the M consecutive DRX cycles. Once the UE determines (detects) that the UE has not been woken up for the M consecutive DRX cycles, the UE assumes that the reference signal resource is transmitted. To be specific, the reference signal resource configured by RRC signaling is not transmitted, and is transmitted only after the specific event occurs.

In a possible implementation of configuring the reference signal resource, the network device configures a time domain parameter and a frequency domain parameter of the reference signal resource, and other required parameters. The time domain parameter includes a cycle and a time offset. For example, the cycle may be in units of slots, and the time offset may be a slot offset. The frequency domain parameter includes a resource mapping parameter, used to determine a frequency domain position of the reference signal. In addition, the other required parameters include a port number, a CDM type, a density parameter, a parameter of a symbol position occupied in a slot, a repetition parameter (used to determine whether a reference signal on every OFDM symbol uses a same spatial domain transmission filter and a same port number, for UE-side beam selection in beam management), a TRS parameter (used to determine whether the reference signal is used for time-frequency tracking), and the like.

The following illustrates two possible solutions to configuring the reference signal resource in association with the WUS.

Solution 1

When configuring the WUS, the network device configures the reference signal resource associated with the WUS. Associating with the WUS may also be understood as associating with the WUS monitoring occasion in time domain.

A difference from the foregoing separate configuration of the additional reference signal resource is: because the WUS has a cycle, when the reference signal resource associated with the WUS is configured, the cycle of the reference signal does not need to be additionally configured; because the reference signal is associated with the WUS, the cycle of the reference signal is automatically the same as the cycle of the associated WUS.

Therefore, the parameters configured for the reference signal resource associated with the WUS include the foregoing frequency domain parameter and other required parameters, but do not include a time domain parameter, that is, do not include a cycle.

Specifically, the reference signal resource is associated with the WUS by configuring a time offset (offset) between the reference signal resource and the WUS monitoring occasion.

The reference signal resource associated with the WUS may be a resource set, including one or more CSI-RS resources. The network configures a time offset between each CSI-RS resource and the WUS monitoring occasion. For example, a start point of the time offset is the WUS monitoring occasion, and an end point of the time offset is a CSI-RS resource.

When the WUS monitoring occasion occupies only one OFDM symbol, the start point of the time offset is a symbol on which the WUS is located. When the WUS monitoring occasion occupies a plurality of OFDM symbols, the start point of the time offset is a start OFDM symbol or an end OFDM symbol of the WUS monitoring occasion. When a duration of one OFDM symbol cannot be ignored, the start point of the time offset is a start time or an end time of the start OFDM symbol (or the end OFDM symbol) of the WUS monitoring occasion. A manner of determining the end point of the time offset is similar to this, and is not described.

Optionally, the time offset is a slot interval between a slot in which the WUS is located and a slot in which the CSI-RS resource is located. Specifically, the time offset is a slot interval between a start time (or an end time) of the slot in which the WUS is located and a start time (or an end time) of the slot in which the CSI-RS resource is located.

Solution 2

When configuring the WUS, the network device configures an index and a time offset, where the index is associated with a configured CSI-RS resource number. However, in this case, in parameters corresponding to the configured CSI-RS resource number associated with the index, a cycle parameter and a slot offset parameter are invalid, and other parameters are all valid. Parameters of a CSI-RS resource associated with the WUS are configured based on other parameters than the cycle parameter and the slot offset parameter. A time domain position of the CSI-RS resource associated with the WUS is determined based on a configured time offset. The time offset indicates a time interval between the WUS and the CSI-RS resource associated with the WUS. A specific implementation thereof is similar to that in the foregoing solution 1, and is not described again herein.

In a possible implementation, regardless of whether the WUS is transmitted, and if the WUS is transmitted, regardless of whether the WUS indicates wake-up or non wake-up of the UE, the reference signal resource associated with the WUS monitoring occasion is transmitted.

In another possible implementation, the reference signal resource associated with the WUS monitoring occasion is transmitted only when the WUS indicates wake-up of the UE. The reference signal resource associated with the WUS monitoring occasion is not transmitted when the WUS indicates non wake-up of the UE.

In another possible implementation, an associated reference signal resource is configured for only a WUS monitoring occasion before an on-duration of a long DRX cycle, but no associated reference signal resource is configured for a WUS monitoring occasion before an on-duration of a short DRX cycle.

(The foregoing is a mode of configuration in association with the WUS)

The following describes the implicit modes.

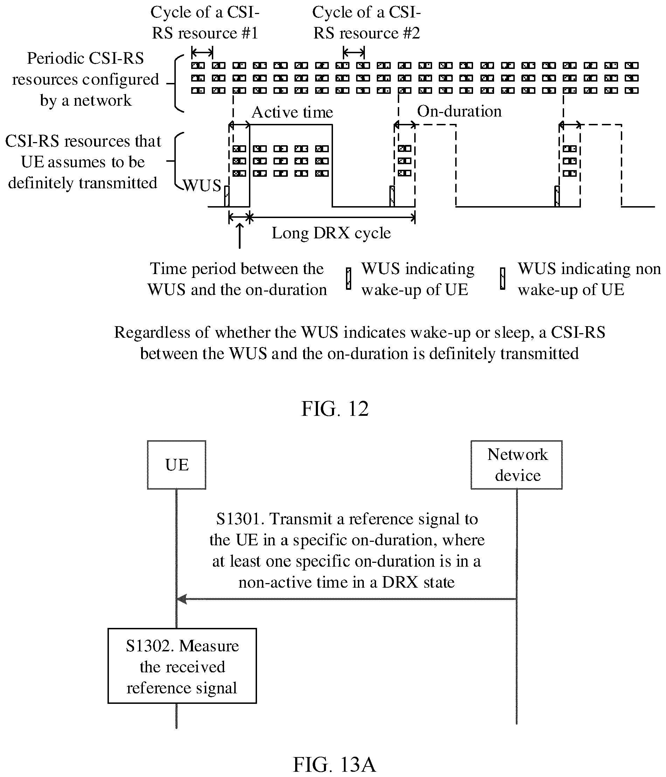

Implicit mode 1: Regardless of whether the WUS indicates wake-up or sleep, a CSI-RS between the WUS and the on-duration is definitely transmitted, and the UE may also use the CSI-RS to perform measurement and CSI reporting, for example, as shown in FIG. 12.

It may be understood that herein it is assumed that the reference signal resource has been configured (details about the periodic CSI-RS resource, or the activated semi-persistent CSI-RS resource, or the periodic CSI-RS resource and the activated semi-persistent CSI-RS resource are described above, and are not described again).

If the WUS indicates wake-up, the UE may measure the CSI-RS between the WUS and the on-duration, or perform measurement and report CSI before the on-duration or in the on-duration. This helps improve a data rate.

If the WUS indicates sleep, the UE may measure the CSI-RS between the WUS and the on-duration, for example, perform time-frequency tracking, beam management measurement, CQI measurement, or RRM measurement. If the network device configures the UE to report CSI, the UE reports CSI. This helps the UE maintain time-frequency tracking and an appropriate receive beam. If the network device configures CSI reporting, the configuration helps the base station obtain CSI in time, and helps improve PDCCH-WUS reliability, for example, update a transmit beam of a PDCCH-WUS, or select appropriate parameters such as a modulation and coding scheme and an aggregation level (aggregation level, AL) for a PDCCH-WUS.

Implicit mode 2: For the reference signal in each solution described above, the reference signal is definitely transmitted only when the WUS indicates wake-up. When the WUS indicates sleep, the UE cannot assume that the reference signal is definitely transmitted.

Based on specific implementations of the foregoing explicit and implicit modes, a specific implementation of the time domain position of the reference signal resource (that is, the reference signal resource included in the foregoing first time period (or the window), or the X reference signal resources, or the reference signal resource additionally configured by the network device, or the reference signal resource between the WUS and the on-duration) may be as follows:

Optionally, the reference signal resource is after the end time of the WUS monitoring occasion. Specifically, the reference signal resource is after the end symbol of the WUS monitoring occasion, or after the slot in which the end symbol of the WUS monitoring occasion is located.

Optionally, the reference signal resource is after the end symbol of the WUS monitoring occasion, and a time interval between the reference signal resource and the end symbol of the WUS monitoring occasion is greater than or equal to a specified threshold 1.

Optionally, the specified threshold 1 is greater than or equal to the PDCCH-WUS demodulation, decoding, and parsing time, or the WUS DCI parsing time, so that the reference signal resource is located after the UE parses the PDCCH-WUS successfully. Therefore, the UE measures the reference signal resource only if the WUS indicates wake-up of the UE, without caching the signal in advance before the PDCCH-WUS is parsed successfully. If the WUS indicates non wake-up of the UE, the UE may not perform measurement, but directly enter the sleep state. This avoids unnecessary caching of the reference signal.

Optionally, the reference signal resource is before the on-duration associated with the WUS, and a time interval between the reference signal resource and the start time of the on-duration is greater than or equal to a specified threshold 2. Specifically, a time interval between an end time (end symbol) of the reference signal resource and the start time of the on-duration is greater than or equal to the specified threshold 2, or a time interval between the start time (start symbol) of the reference signal resource and the start time of the on-duration is greater than or equal to the specified threshold 2.

Optionally, the specified threshold 2 is greater than or equal to the CSI processing and calculation time. Therefore, if the WUS indicates wake-up of the UE, when the UE starts the drx-onDurationTimer, the UE has prepared CSI to be reported, and can report the CSI as soon as possible in the on-duration. This helps the base station obtain accurate CSI of the UE as soon as possible, and improves performance of the UE.

Optionally, the reference signal resource is after the start time (start symbol) of the WUS monitoring occasion.

Optionally, the reference signal resource is between the WUS monitoring occasion and the on-duration. Specifically, the reference signal resource is between the start time (start symbol) or the end time (end symbol) of the WUS monitoring occasion and the start time of the on-duration.

Optionally, the reference signal resource is before the WUS monitoring occasion. For example, the reference signal resource is before the start time (start symbol) of the WUS monitoring occasion, or is before a start symbol of a start slot of the WUS monitoring occasion. Therefore, before receiving the WUS, the UE can perform time-frequency tracking or beam management (for example, receive-end beam selection) based on the reference signal resource. This helps improve PDCCH-WUS reliability, and improve PDCCH-WUS performance.

It may be understood that when the reference signal resource is a configured reference signal resource, the foregoing relative time domain positions between the reference signal resource and the WUS monitoring occasion and the on-duration may also be understood as relative time domain positions between the window configured by the network device and the WUS monitoring occasion and the on-duration. The UE assumes that only the reference signal in the window exists, in addition to those in the active time.

It may be understood that when the reference signal resource is additionally configured, or is configured in association with the WUS, in addition to the foregoing relative time domain positions between the reference signal resource and the WUS monitoring occasion and the on-duration, in a possible implementation, the reference signal resource may also be partially or completely after the start time of the on-duration.

S402. The UE measures the received reference signal.

In this embodiment of the present invention, the UE may measure the reference signal for a plurality of purposes, for example, for channel quality measurement, for beam management measurement, for time-frequency tracking measurement, or mobility management measurement. This is not specifically limited in this embodiment of the present invention.

In an optional implementation, in this embodiment of the present invention, for some measurement purposes, the UE may not report a measurement result to the network device. For example, when the reference signal is used for time-frequency tracking measurement, the UE does not need to report a measurement result. In addition, for receive-end beam selection in beam management, the network device may configure the UE not to perform reporting, and the UE only needs to select an appropriate receive beam based on reference signal measurement.

However, for other measurement purposes, the UE may report a measurement result to the network device.

Referring to FIG. 4B, after step S402, the signal measurement method may further include:

S403. The UE reports a measurement result to the network device, where the measurement result is obtained by measuring the reference signal.

For example, for channel quality measurement, the UE may report the CQI/PMI/RI/CRI/LI. The network device may obtain accurate channel state information based on the CSI reported by the UE, and select appropriate precoding and an appropriate modulation and coding scheme, so that the CSI matches the current channel (PDCCH/PDSCH) better. For another example, for transmit-end beam selection in beam management, the UE may report measured beam quality (for example, LI-RSRP) and a beam index (resource indicator). The base station may select an appropriate transmit beam based on the beam quality and beam index reported by the UE. For another example, for mobility management, the UE reports a measurement result with respect to the reference signal, for example, reference signal received power (reference signal receiving power, RSRP), reference signal received quality (reference signal receiving quality, RSRQ), and a signal-to-noise ratio (signal to interference plus noise ratio, SINR), used by the base station to determine whether to perform a cell handover (handover) process. A time of reporting the measurement result may be in the non-active time, or may be in the active time. This is not limited herein in this embodiment of the present invention. For example, the measurement result is reported to the network side before the on-duration or in the on-duration; or after it is determined that the WUS signal indicates wake-up of the UE in an on-duration corresponding to the WUS signal, the measurement result is reported to the network side before the on-duration corresponding to the WUS signal or in the on-duration corresponding to the WUS signal; or the measurement result is reported to the network side before the on-duration of the first DRX cycle or in the on-duration of the first DRX cycle after the UE sleeps for the M consecutive DRX cycles.

Measurement for CSI reporting is hereinafter used as an example to describe in detail several possible solutions to reporting a measurement result (that is, reporting CSI) by the UE.

Manner 1: Regardless of the indication of the WUS, the network device configures the UE to perform reporting on a CSI reporting resource before the on-duration.

A. CSI reporting resource configuration modes include but are not limited to the following five modes (a. 1, a.2, a.3, a.4, and a.5).

a. 1. The reporting resource is a configured periodic PUCCH resource.

In a possible design, the network device may configure or indicate a periodic PUCCH resource number. Correspondingly, based on the configuration or indication of the network device, the UE transmits CSI on a PUCCH resource corresponding to the periodic PUCCH resource number.

In a possible design, the network device may configure the UE to perform CSI reporting on P PUCCH resources, where P is greater than or equal to 1. When P is greater than 1, that is, the P PUCCH resources are a plurality of PUCCH resources, the plurality of PUCCH resources have a same periodic PUCCH resource number or have different periodic PUCCH resource numbers. This is not limited herein in this embodiment of the present invention.

Further, the P PUCCH resources may be after the WUS monitoring time, or may be before the WUS monitoring time. This is not limited herein.

When the P PUCCH resources are after the WUS monitoring time and before the on-duration, optionally, a time interval between the P PUCCH resources and the WUS monitoring occasion is greater than a specified threshold. Optionally, the P PUCCH resources may be P PUCCH resources that are before the on-duration and nearest to the start time of the on-duration. For example, P = 1 represents a PUCCH resource that is before the on-duration and nearest to the start time of the on-duration. Optionally, the P PUCCH resources are PUCCH resources that are after the WUS monitoring occasion and nearest to the WUS monitoring occasion. For example, P = 1 represents a first PUCCH resource that is after the WUS monitoring occasion and nearest to the WUS monitoring occasion.

When the P PUCCH resources are before the WUS monitoring time, optionally, the P PUCCHs are PUCCHs that are before the WUS monitoring occasion and nearest to the WUS monitoring occasion. For example, P = 1 represents a first PUCCH resources that is before the WUS monitoring occasion and nearest to the WUS monitoring occasion. Optionally, the network device configures a reporting window before the on-duration, and the UE performs CSI reporting on a PUCCH in the reporting window. For an implementation of the reporting window, refer to the foregoing method for configuring the window for determining the reference signal resource.

a.2. The reporting resource is a configured semi-persistent PUCCH resource.

Specifically, the semi-persistent PUCCH resource is a PUCCH resource that has been activated and has not been deactivated. Activation and deactivation of the semi-persistent PUCCH are both indicated by MAC CE signaling delivered by the network device. Other methods for determining the PUCCH resource are similar to a.1. Details are not described again herein.

a.3. The reporting resource is a semi-persistent PUSCH resource configured by RRC or activated by DCI.

For a semi-persistent PUSCH resource activated by DCI, the semi-persistent PUSCH resource has not been deactivated, that is, the UE has not received deactivation DCI, or there is no other reason to cause the semi-persistent PUSCH resource to be deactivated. Other methods for determining the PUSCH resource are similar to a. 1. Details are not described again herein.

Optionally, a cyclic redundancy check (cyclic redundancy check, CRC) in the DCI for activating the semi-persistent PUSCH resource is scrambled by an SP-CSI-RNTI or a CS-RNTI. This is not limited herein in this embodiment of the present invention.

The semi-persistent PUSCH resource configured by RRC is a type-1 (type1) PUSCH resource, and is configured by an RRC-configured uplink scheduling grant (IE rrc-ConfiguredUplinkGrant).

a.4. The reporting resource is a PUCCH or PUSCH resource newly configured (or additionally configured) by the network device.

Optionally, the network device may use RRC signaling to configure the PUCCH or PUSCH resource, including PUCCH/PUSCH resources in time domain and frequency domain, and the like.

Optionally, the configuration signaling and signaling for configuring the WUS are a same piece of signaling.

For example, the signaling is a PDCCH-WUS-Config IE.

Optionally, the configuration signaling and signaling for configuring C-DRX are a same piece of signaling. For example, the signaling is located in a DRX-Config IE.

The network device may configure one or more PUCCH resources or one or more PUSCH resources before the on-duration.

Optionally, the network device configures a time offset between the PUCCH/PUSCH resource and the start time of the on-duration.

Optionally, the network device configures a time offset between the PUCCH/PUSCH resource and the start time or end time of the WUS monitoring occasion.

The time offset may be a slot offset, a symbol offset, or a subframe offset. A time domain position of the newly configured PUCCH/PUSCH resource may be determined based on the time offset.

a.5. Regardless of the indication of the WUS, that is, regardless of whether the WUS indicates wake-up or non wake-up of the UE, that is, regardless of whether the UE starts the drx-onDurationTimer, the UE reports CSI on a newly configured PUCCH/PUSCH resource before the on-duration.

Optionally, the configured PUCCH or PUSCH resource is after the WUS monitoring time and before the on-duration.

Optionally, the configured PUCCH or PUSCH resource is after the WUS monitoring time, and a time interval between the configured PUCCH or PUSCH resource and the WUS monitoring occasion is greater than a specified threshold x1.

Optionally, the configured PUCCH or PUSCH resource is after the WUS monitoring time, and a time interval between the configured PUCCH or PUSCH resource and the WUS monitoring occasion is less than a specified threshold x2.

Optionally, the configured PUCCH or PUSCH resource is before the on-duration, and a time interval between the configured PUCCH or PUSCH resource and the start time of the on-duration is less than a specified threshold x3.

Optionally, the configured PUCCH or PUSCH resource is before the WUS monitoring time.

Optionally, the configured PUCCH or PUSCH resource is before the WUS monitoring time, and a time interval between the configured PUCCH or PUSCH resource and the WUS monitoring occasion is less than a specified threshold x4.

B. CSI reporting cycle.

In this embodiment of the present invention, a meaning of the CSI reporting cycle is: if one or more reporting resources (PUCCH/PUSCH) exist before one on-duration, a time period is defined, and the time period includes one or more PUCCH/PUSCH resources before the on-duration; in this case, the CSI reporting cycle is equal to a time interval between a start time (or an end time) of the time period and that of an adjacent time period.

In this embodiment of the present invention, a specific implementation of the CSI reporting cycle may be at least one of the following several implementations:

b. 1. The CSI reporting resource exists both before an on-duration of a long DRX cycle and before an on-duration of a short DRX cycle. Therefore, when the UE enters the short DRX cycle, the CSI reporting cycle becomes shorter. It may also be understood that the CSI reporting does not have a fixed cycle.

In a possible design, the CSI reporting resource exists only before the on-duration of the long DRX cycle, and the CSI reporting resource does not exist before the on-duration of the short DRX cycle.

Optionally, if the on-duration of the short DRX cycle overlaps the on-duration of the long DRX cycle, and the DRX short cycle timer (drx-shortCycleTimer) is running in this case, it indicates that the UE is currently in the short DRX cycle. In this case, it may be specified that the CSI reporting resource also exists before the on-duration. Therefore, the CSI reporting resource has a fixed cycle, that is, its duration is equal to the duration of one long DRX cycle.

Optionally, if the on-duration of the short DRX cycle overlaps the on-duration of the long DRX cycle, and the DRX short cycle timer (drx-shortCycleTimer) is running in this case, it indicates that the UE is currently in the short DRX cycle. In this case, it may be specified that the CSI reporting resource does not exist before the on-duration. Therefore, the CSI reporting resource may not have a fixed cycle. There are some scenarios in which a duration between two adjacent CSI reporting resources is longer than the duration of one long DRX cycle.

In a possible design, the CSI reporting resource is configured only before a DRX on-duration in which a WUS monitoring occasion exists.

Optionally, if a WUS monitoring occasion does not exist before an on-duration of every long DRX cycle, in a possible implementation, the CSI reporting resource is configured only before an on-duration of a long DRX cycle in which a WUS monitoring occasion exists.

In a possible design, the CSI reporting cycle configured by the network device is N times one long DRX cycle, or N times one WUS monitoring cycle, where N is a positive integer.

C. Relationship between CSI reporting and the CSI reporting resource.

It may be understood that when the UE reports CSI to the network device on the CSI reporting resource before the on-duration, the reported CSI is a measurement result obtained by measuring the reference signal on the reference signal resource. It should be understood that the foregoing reference signal resource is before the CSI reporting resource.

In a possible design, a time interval between the reference signal resource and the CSI reporting resource is greater than a specified threshold.

In a possible design, a time interval between the CSI reporting resource and at least R CSI-RS resources (or CSI resources for short) in the reference signal resource is greater than the specified threshold. R is greater than or equal to 1. For example, the specified threshold is greater than or equal to the CSI processing and calculation time.

In a possible design, before one on-duration, the reference signal resource exists, and the CSI reporting resource also exists. In another possible design, before one on-duration, only the reference signal resource exists, and the CSI reporting resource does not exist.

Manner 2: When the WUS indicates wake-up of the UE in the on-duration, the UE reports CSI on a CSI reporting resource before the on-duration.

Certainly, the UE may perform normal reporting in the active time, for example, perform normal reporting in the on-duration in which the WUS indicates wake-up of the UE, but may not perform reporting in an on-duration in which the WUS indicates sleep of the UE (that is, neither perform reporting before the on-duration nor perform reporting in the on-duration).

For the CSI reporting resource configuration mode in the manner 2, refer to the configuration mode in the foregoing manner 1. Details are not described again herein.

Manner 3: The UE reports CSI on a CSI reporting resource before the on-duration of the (M+1)th DRX cycle only after the UE sleeps for the M consecutive DRX cycles, where M is an integer greater than or equal to 0.

To be specific, the UE reports CSI on a CSI reporting resource before the on-duration of the first DRX cycle after the UE sleeps for the M consecutive DRX cycles, but the UE may not report CSI in the M DRX cycles in which the UE sleeps.

It should be understood that in the (M+1)th DRX cycle, regardless of whether the WUS indicates wake-up or non wake-up of the UE, the UE may report CSI before the on-duration of the (M+1)th DRX cycle.

The DRX cycle is a long DRX cycle or a short DRX cycle. This is not limited herein.

In a possible design, when M consecutive WUS monitoring occasion sets all indicate that the UE does not need to be woken up, the UE reports CSI on the CSI reporting resource before an on-duration of a first DRX cycle after a DRX cycle in which the M consecutive WUS monitoring occasion sets indicate that the UE does not need to be woken up. One or more WUS monitoring occasions before one on-duration are referred to as a WUS monitoring occasion set.

For the CSI reporting resource configuration mode in the manner 3, refer to the configuration mode in the foregoing manner 1. Details are not described again herein.

Manner 4: If the WUS indicates wake-up of the UE in the on-duration to monitor the PDCCH, the UE performs CSI reporting on a CSI reporting resource in the on-duration. The network configures or the protocol specifies that the CSI reported by the UE in the on-duration may be a measurement result obtained after measurement is performed based on the reference signal resource before the on-duration.

If the WUS indicates non wake-up of the UE, the UE does not report CSI in the on-duration.

Optionally, the network configures that CSI reported by the UE on first E CSI reporting resources in the on-duration is a measurement result obtained after measurement is performed based on the reference signal resource before the on-duration. E is greater than or equal to 1.

Optionally, the network configures or the protocol specifies that CSI reported by the UE on a first CSI reporting resource in the on-duration is a measurement result obtained after measurement is performed based on the reference signal resource before the on-duration.

Optionally, the network configures or the protocol specifies that CSI reported by the UE on a CSI reporting resource in a specific time period in the on-duration is a measurement result obtained after measurement is performed based on the reference signal resource before the on-duration. Optionally, the specific time period is a start time period of the on-duration. For example, the specific time period is first X slots of the on-duration, where X is greater than or equal to 1.

In a possible implementation, the CSI reporting resource is a configured periodic PUCCH resource.

In a possible implementation, the CSI reporting resource is a semi-persistent PUCCH resource that has been activated and has not been deactivated.

In a possible implementation, the CSI reporting resource is a semi-persistent PUSCH resource that has been activated and has not been deactivated.

Optionally, the semi-persistent PUSCH resource is a PUSCH resource that has been activated by DCI and has not been deactivated. Optionally, a CRC of the DCI is scrambled by a CS-RNTI or an SP-CSI-RNTI.

Optionally, the semi-persistent PUSCH resource is a PUSCH resource that has been configured by RRC signaling and has not been released.

It may be understood that if the WUS indicates wake-up of the UE in the on-duration to monitor the PDCCH, and the foregoing reference signal resource exists before the on-duration (and after the previous on-duration), the CSI reported by the UE in the on-duration may be a measurement result obtained after measurement is performed based on the reference signal resource before the on-duration.

In addition, as described above, to reduce a frequency of receiving, by the UE, the reference signal transmitted on the reference signal resource, to reduce power consumption, it is possible that the reference signal resource does not exist before every on-duration (for example, when the cycle of the first time period including the reference signal resource is twice the DRX cycle). If the foregoing reference signal resource does not exist before the on-duration (and after the previous on-duration), and the WUS indicates wake-up of the UE in the on-duration to monitor the PDCCH, when the first time period that is before the on-duration and nearest to the on-duration is nearer to the on-duration than the previous active time before the on-duration, the CSI reported by the UE in the on-duration may be a measurement result obtained after measurement is performed based on the reference signal resource in the first time period that is before the on-duration and nearest to the on-duration; otherwise, when the first time period that is before the on-duration and nearest to the on-duration is farther from the on-duration than the previous active time before the on-duration, the CSI reported by the UE in the on-duration may be a measurement result obtained after measurement is performed based on the reference signal resource in the previous active time before the on-duration.

Manner 5: After the UE sleeps for the M consecutive DRX cycles, regardless of whether the WUS indicates wake-up or non wake-up of the UE in the $(M+1)^{th}$ DRX cycle, the UE performs CSI reporting on a CSI reporting resource in the on-duration of the $(M+1)^{th}$ DRX cycle. The network configures or the protocol specifies that CSI reported by the UE in the on-duration of the $(M+1)^{th}$ DRX cycle may be a measurement result obtained after measurement is performed based on the reference signal resource before the on-duration.

The UE may not report CSI in the M DRX cycles in which the UE sleeps.

The $(M+1)^{th}$ DRX cycle is the first DRX cycle after the M consecutive DRX cycles in which the UE sleeps, where M is an integer greater than or equal to 0.

For the CSI reporting resource configuration mode in the manner 5, refer to the CSI reporting resource configuration mode in the foregoing manner 4. Details are not described again herein.

It should be noted that in the DRX cycle for wake-up of the UE in the manner 4, and in the $(M+1)^{th}$ DRX cycle in the manner 5, if the WUS indicates wake-up of the UE, the configured or activated reference signal resource is normally transmitted to the UE the on-duration. Therefore, except that the CSI reported by the UE on the specific CSI reporting resource in the on-duration is obtained through measurement based on the reference signal resource before the on-duration, CSI reported by the UE on a subsequent CSI reporting resource is obtained through measurement based on the reference signal resource in the on-duration (or the active time). In the $(M+1)^{th}$ DRX cycle in the manner 5, if the WUS still indicates non wake-up of the UE, the reference signal resource exists only before the on-duration. Therefore, the CSI reported by the UE in the on-duration can only be a measurement result obtained after measurement is performed based on the reference signal resource before the on-duration.

The specific CSI reporting resource is a reporting resource configured to report a measurement result based on the reference signal resource before the on-duration.

In a possible design, the network device may configure that when M consecutive WUS monitoring occasion sets all indicate that the UE does not need to be woken up, the UE reports CSI on the CSI reporting resource in the on-duration of the first DRX cycle after the DRX cycle in which the M consecutive WUS monitoring occasion sets indicate that the UE does not need to be woken up.

It may be understood that if the reference signal resource and CSI reporting resource described above are newly configured and are not resources that are already configured, if the reference signal resource or CSI reporting resource is in the active time, for example, if a DRX-inactivity timer is running, the reference signal resource is not transmitted, and the UE does not report CSI on the CSI reporting resource either. Because the UE is in the active time, the UE may perform measurement on the configured reference signal resource or activated reference signal resource. The UE reports CSI on a configured periodic CSI reporting resource or an activated CSI reporting resource.

In the foregoing solution, the UE can measure the reference signal before the on-duration (in the non-active time), and can report, in the non-active time or active time, a measurement result obtained before the on-duration. Therefore, even if the UE is in long sleep or after the UE is woken up from long sleep, the UE or the network device can obtain an accurate reference signal measurement result in time. Further, PDCCH-WUS reliability and performance of the UE woken up from long sleep are ensured. In addition, the UE can further perform beam management based on the reference signal in the non-active time. Therefore, a beam failure is avoided, and power consumption of the UE is reduced.

**Embodiment 2**

FIG. 13A is a flowchart of another signal measurement method according to this embodiment of the present invention. The method includes the following steps.

S1301. Transmit a reference signal to UE in a specific on-duration, where at least one specific on-duration is in a non-active time in a DRX state.

S1302. The UE measures the received reference signal.

Specifically, in the specific on-duration configured by a network, regardless of an indication of a WUS (for example, even if the WUS indicates non wake-up of the UE, the UE does not start a DRX-onduration timer), the UE assumes that the reference signal is definitely transmitted, and the UE may receive the reference signal and perform reference signal measurement and reporting. In other words, if one specific on-duration arrives, the UE does not start the DRX-onduration timer. In this case, the specific on-duration is in the non-active time in the DRX state, and the UE receives the reference signal and measures the reference signal in the non-active time in the DRX state.

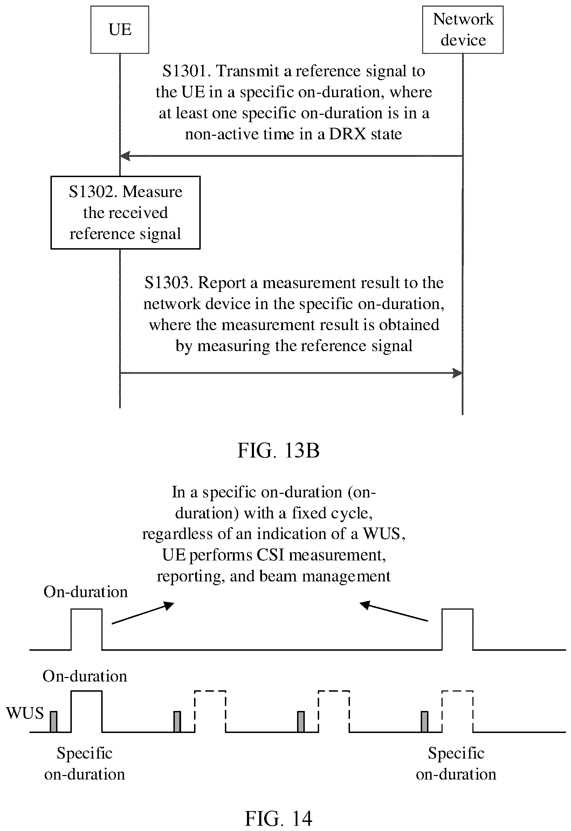

Further, the UE may further report a measurement result to a network side in the specific on-duration. Referring to FIG. 13B, after the foregoing step S1302, the method further includes: S1303. The UE reports a measurement result to a network device in the specific on-duration, where the measurement result is obtained by measuring the reference signal.

Therefore, when the specific on-duration is in the non-active time in the DRX state, the UE can report the measurement result in the non-active time in the DRX state.

In any other on-duration than the specific on-duration, if a WUS indicates non wake-up of the UE, the UE does not start the DRX-onduration timer. In this on-duration, the UE does not assume that the reference signal is definitely transmitted, and the UE does not perform reference signal measurement and reporting either. Optionally, the network device does not transmit the reference signal in this on-duration.

In this embodiment of the present invention, the specific on-duration may be periodic, or may be aperiodic. This is not limited herein in this embodiment of the present invention. For example, the specific on-duration occurs periodically at specified time intervals, and a cycle in which the specific on-duration occurs is P times a DRX cycle, where P is a positive integer. For example, the specific on-duration is an on-duration of a first DRX cycle after the UE sleeps for M consecutive DRX cycles.

It should be noted that in this embodiment, for a type of the reference signal, a purpose of the reference signal, a purpose of performing signal measurement by the UE, and the like, reference may be made to descriptions of related parts in the foregoing Embodiment 1. Details are not described again herein.

The following describes several specific modes of configuring the specific on-duration.

1. The network device configures the cycle of the specific on-duration.

Specifically, a time domain position of the specific on-duration may be determined based on the cycle of the specific on-duration and configured parameters such as a DRX cycle offset (drx-StartOffset) and a slot offset (drx-Slotoffset).

The parameters such as the DRX cycle offset (drx-StartOffset) and the slot offset (drx-Slotoffset) are located in a DRX-Config IE. The DRX cycle offset (drx-StartOffset) is determined by a parameter drx-LongCycleStartOffset in the DRX-Config IE.

In an optional implementation, the network device sets the cycle of the specific on-duration to N times a long DRX cycle, where N is greater than or equal to 1. For example, as shown in FIG. 14, N = 3. When N = 1, it means that in this configuration of the network device, regardless of an indication of a WUS, in an on-duration of each long DRX cycle, the UE assumes that a reference signal is definitely transmitted, and the UE may report CSI.

If a current DRX short cycle timer (drx-ShortCycleTimer) is running, it indicates that the UE is in a short DRX cycle. In an optional implementation, if a WUS indicates that the UE does not need to be woken up in the short DRX cycle, in an on-duration of the short DRX cycle in which the UE does not need to be woken up, the UE also assumes that a reference signal is definitely transmitted, and the UE may report a measurement result.

2. The network device configures that the specific on-duration is a first on-duration (that is, an (M+1)$^{th}$ DRX cycle) after the UE sleeps for M consecutive DRX cycles.

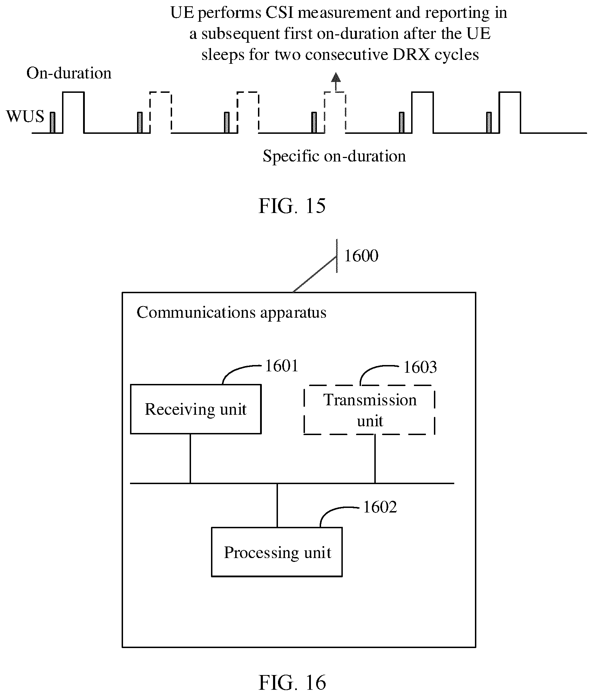

The DRX cycle may be a long DRX cycle. To be specific, the UE receives the reference signal and performs reference signal measurement and reporting in the first on-duration after the UE sleeps for M consecutive long DRX cycles. Certainly, the DRX cycle may also be a short DRX cycle. To be specific, the UE receives the reference signal and performs reference signal measurement and reporting in a first on-duration after the UE sleeps for M consecutive short DRX cycles, as shown in FIG. 15.

3. The network device configures that if M consecutive WUS monitoring occasion sets all indicate non wake-up of the UE, an on-duration of a first DRX cycle after a DRX cycle in which the M consecutive WUS monitoring occasion sets indicate that the UE does not need to be woken up is the specific on-duration.

One or more WUS monitoring occasions before one on-duration are referred to as a WUS monitoring occasion set.

Optionally, if the UE is configured with a short DRX cycle, and a WUS monitoring occasion is also configured before an on-duration of the short DRX cycle, the M consecutive WUS monitoring occasion sets do not include a WUS monitoring occasion set before the on-duration of the short DRX cycle.

The following describes a CSI-RS resource in the specific on-duration.

If the WUS indicates non wake-up of the UE in the specific on-duration, the UE assumes that a reference signal resource that is definitely transmitted is a configured periodic reference signal resource.

In a possible implementation, the reference signal resource may also be a semi-persistent CSI-RS resource that has been activated and has not been deactivated.

In a possible implementation, the reference signal resource may also be a CSI-RS resource that is additionally configured.

The following describes a CSI reporting resource in the specific on-duration.

If the WUS indicates non wake-up of the UE in the specific on-duration, the CSI reporting resource used by the UE to report CSI is a configured periodic PUCCH resource.

In a possible implementation, the CSI reporting resource may also be a semi-persistent PUCCH resource that has been activated and has not been deactivated.

In a possible implementation, the CSI reporting resource is a semi-persistent PUSCH resource that has been activated and has not been deactivated.

Optionally, the semi-persistent PUSCH resource is a PUSCH resource that has been activated by DCI and has not been deactivated. Optionally, a CRC of the DCI is scrambled by a CS-RNTI or an SP-CSI-RNTI. This is not limited herein.

Optionally, the semi-persistent PUSCH resource is a PUSCH resource that has been configured by RRC signaling and has not been released.

Optionally, the UE may also transmit uplink data on the semi-persistent PUSCH resource.

In the foregoing solution, the UE can perform reference signal measurement and reporting in the specific on-duration. When at least one on-duration is in the non-active time, the UE can perform reference signal measurement and reporting in the non-active time. Therefore, the network device or the UE can obtain an accurate reference signal measurement result in time even if the UE is in long sleep or after the UE is woken up from long sleep. Further, PDCCH-WUS reliability and performance of the UE woken up from long sleep are ensured. In addition, the UE can further perform beam management based on the reference signal in the non-active time. Therefore, a beam failure is avoided, and power consumption of the UE is reduced.

It should be understood that various implementations in the foregoing Embodiment 1 and Embodiment 2 may be further mutually combined to achieve different technical effects.

It should be understood that the foregoing embodiment may be further applied to carrier aggregation (carrier aggregation, CA) or dual connectivity (dual connectivity, DC).

A specific background is as follows: In a CA/DC scenario, a network device can dynamically indicate, by using physical layer signaling, behavior of monitoring a PDCCH on different carriers by UE, and can flexibly control a quantity of carriers on which the UE monitors the PDCCH. Therefore, when a data amount is relatively small, a relatively small quantity of carriers can be used to monitor the PDCCH; or when a data amount is relatively large, a relatively large quantity of carriers can be used to monitor the PDCCH. This can prevent the UE from always using a fixed quantity of carriers to monitor the PDCCH, so that power consumption of the UE is reduced. When the UE does not need to monitor the PDCCH on a carrier, the carrier is still in an active state, and the UE still needs to perform some measurement and reporting, for example, perform behavior such as time-frequency synchronization, CSI measurement and CSI reporting, and/or RRM measurement. When the UE does not monitor the PDCCH on the carrier in the active state, behavior of the UE on the carrier may be referred to as dormancy behavior (dormancy behavior). For example, in a CA scenario, the UE is configured with two cells: one primary cell (PCell) and one secondary cell (SCell); and the UE in an RRC connected state is configured with a DRX mechanism. The UE determines, based on an indication of a PDCCH-WUS, whether to be woken up to monitor the PDCCH in a DRX on-duration in the primary cell, and the network device may dynamically indicate whether the UE is to enter the dormancy state in the secondary cell or to return from the dormancy behavior to a state of normally monitoring the PDCCH.

After the UE enters the dormancy behavior on a carrier, the UE still performs some channel measurement and reporting behavior for purposes of maintaining the cell in the active state and quickly returning to the state of normally monitoring the PDCCH when data arrives. However, the UE may not need to perform measurement and reporting frequently. For example, to reduce power consumption of the UE or based on request information transmitted by the UE, or when the network device perceives that a moving speed of the UE is relatively low (a channel state changes slowly), the network device may configure a frequency of performing measurement and measurement reporting by the UE in the dormancy behavior on one carrier, to further reduce power consumption of the UE.

Therefore, each implementation in Embodiment 1 and Embodiment 2 described in the embodiments is applicable to the CA/DC scenario, and is used to configure a time domain position of the reference signal resource, or configure a time period of receiving the reference signal by the UE, and configure a time-frequency resource for performing CSI reporting or RRM measurement reporting by the UE, or configure a time period of performing CSI reporting or RRM measurement reporting by the UE, or the like.

In a specific example 1, the UE is in the dormancy behavior in a first SCell, and the network device configures the UE to perform measurement and reporting only in a specific time period in the first SCell, including but not limited to at least one of the following: time-frequency tracking, CSI measurement and CSI reporting, beam management, and RRM measurement and reporting.

In a possible implementation, the specific time period overlaps a part or an entirety of an on-duration, and a cycle of the specific time period is an integer multiple of the DRX cycle.

Optionally, the specific time period is an on-duration, and a cycle of the specific time period is an integer multiple of the DRX cycle (the specific time period in this example is similar to the foregoing specific on-duration).

Optionally, the specific time period is a start time period, for example, first X slots of an on-duration.

Other information refer to each implementation in the foregoing Embodiment 1 and Embodiment 2. Details are not described again.

Based on a same technical concept, an embodiment of the present invention further provides a communications apparatus, where the communications apparatus is, for example, UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

For example, referring to FIG. 16, the communications apparatus 1600 includes: a receiving unit 1601, which may be configured to receive a reference signal in a non-active time non-active time in a discontinuous reception DRX state; and a processing unit 1602, which may be configured to measure the reference signal

In a possible design, the receiving unit 1601 is specifically configured to receive the reference signal in a first time period before an on-duration on-duration in the DRX state.

In a possible design, the first time period occurs periodically at specified time intervals, and a cycle in which the first time period occurs is N times a DRX cycle or a WUS cycle, where N is a positive integer.

In a possible design, the receiving unit 1601 is specifically configured to receive the reference signal in a first time period before an on-duration of a first DRX cycle after the communications apparatus sleeps for M consecutive DRX cycles, where M is an integer greater than or equal to 0.

In a possible design, the first time period is before the on-duration and after a wake-up signal WUS detection time corresponding to the on-duration; or the first time period is before a WUS detection time corresponding to the on-duration.

In a possible design, the processing unit 1602 may be further configured to determine a reference signal resource; and the receiving unit 1601 may be further configured to receive the reference signal on the reference signal resource, where a time domain position of the reference signal resource is in the non-active time in the DRX state.

In a possible design, the reference signal resource includes: X reference signal resources before or after the WUS detection occasion corresponding to the on-duration, where X is a positive integer.

In a possible design, the X reference signal resources are before the WUS detection occasion corresponding to the on-duration, and a time interval between an end time of at least one of the X reference signal resources and a start time of the WUS detection occasion is greater than or equal to a first threshold; or the X reference signal resources are after the WUS detection occasion corresponding to the on-duration, and a time interval between a start time of at least one of the X reference signal resources and an end time of the WUS detection occasion is greater than or equal to a second threshold; or the X reference signal resources are before the on-duration, and a time interval between an end time of at least one of the X reference signal resources and a start time of the on-duration is greater than or equal to a third threshold.

In a possible design, the apparatus further includes a transmission unit 1603, which may be configured to: report a measurement result to a network side before the on-duration or in the on-duration, where the measurement result is obtained by measuring the reference signal; or after it is determined that a WUS signal indicates wake-up of the communications apparatus in an on-duration corresponding to the WUS signal, report a measurement result to a network side before the on-duration corresponding to the WUS signal or in the on-duration corresponding to the WUS signal, where the measurement result is obtained by measuring the reference signal; or report a measurement result to a network side before the on-duration of the first DRX cycle or in the on-duration of the first DRX cycle after the communications apparatus sleeps for the M consecutive DRX cycles, where the measurement result is obtained by measuring the reference signal.

In another possible design, the receiving unit 1601 may be further configured to receive the reference signal in a specific on-duration, where at least one specific on-duration is in the non-active time in the DRX state.

In a possible design, the specific on-duration occurs periodically at specified time intervals.

In a possible design, a cycle in which the specific on-duration occurs is P times a DRX cycle, where P is a positive integer.

In a possible design, the specific on-duration is the on-duration of the first DRX cycle after the UE sleeps for the M consecutive DRX cycles.

In a possible design, the transmission unit 1603 may be further configured to report a measurement result to the network side in the specific on-duration.

In a possible design, the DRX cycle is a long DRX cycle or a short DRX cycle.

In a possible design, the processing unit 1602 may be further configured to determine a reporting resource; and the transmission unit 1603 may be further configured to report the measurement result on the reporting resource to the network side, where the measurement result is obtained by measuring the reference signal. The reporting resource may include at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released.

All related content of steps in the foregoing method embodiments may be cited in function descriptions of corresponding functional modules. Details are not described again herein.

Based on a same technical concept, an embodiment of the present invention further provides a communications apparatus, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

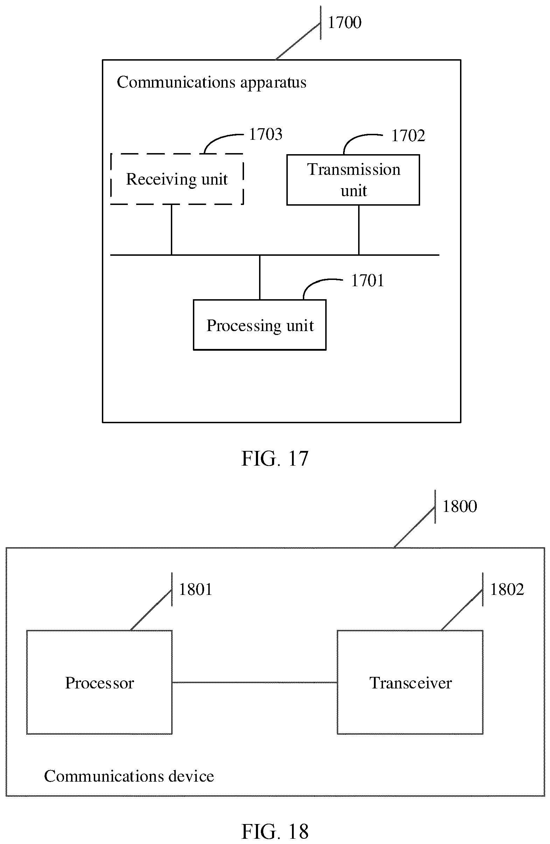

For example, referring to FIG. 17, the communications apparatus 1700 includes: a processing unit 1701, which may be configured to determine a reference signal resource; and a transmission unit 1702, which may be configured to transmit a reference signal based on the reference signal resource in a non-active time non-active time in a discontinuous reception DRX state.

In a possible design, the transmission unit 1702 is specifically configured to transmit the reference signal in a first time period before an on-duration on-duration in the DRX state.

In a possible design, the first time period occurs periodically at specified time intervals, and a cycle in which the first time period occurs is N times a DRX cycle or a WUS cycle, where N is a positive integer.

In a possible design, the transmission unit 1702 is specifically configured to transmit the reference signal in a first time period before an on-duration of a first DRX cycle after the UE sleeps for M consecutive DRX cycles, where M is an integer greater than or equal to 0.

In a possible design, the first time period is before the on-duration and after a wake-up signal WUS detection time corresponding to the on-duration; or the first time period is before a WUS detection time corresponding to the on-duration.

In a possible design, the reference signal resource includes: X reference signal resources before or after the WUS detection occasion corresponding to the on-duration, where X is a positive integer.

In a possible design, the X reference signal resources are before the WUS detection occasion corresponding to the on-duration, and a time interval between an end time of at least one of the X reference signal resources and a start time of the WUS detection occasion is greater than or equal to a first threshold; or the X reference signal resources are after the WUS detection occasion corresponding to the on-duration, and a time interval between a start time of at least one of the X reference signal resources and an end time of the WUS detection occasion is greater than or equal to a second threshold; or the X reference signal resources are before the on-duration, and a time interval between an end time of at least one of the X reference signal resources and a start time of the on-duration is greater than or equal to a third threshold.

In a possible design, the apparatus may further include a receiving unit 1703, configured to: receive a measurement result before the on-duration or in the on-duration, where the measurement result is obtained by the UE by measuring the reference signal; or after it is determined that a WUS signal indicates wake-up of the UE in an on-duration corresponding to the WUS signal, receive a measurement result before the on-duration corresponding to the WUS signal or in the on-duration corresponding to the WUS signal, where the measurement result is obtained by the UE by measuring the reference signal; or receive a measurement result before the on-duration of the first DRX cycle or in the on-duration of the first DRX cycle after the UE sleeps for the M consecutive DRX cycles, where the measurement result is obtained by the UE by measuring the reference signal.

In a possible design, the transmission unit 1702 may be further configured to transmit the reference signal in a specific on-duration, where at least one specific on-duration is in the non-active time in the DRX state.

In a possible design, the specific on-duration occurs periodically at specified time intervals.

In a possible design, a cycle in which the specific on-duration occurs is P times a DRX cycle, where P is a positive integer.

In a possible design, the specific on-duration is the on-duration of the first DRX cycle after the UE sleeps for the M consecutive DRX cycles.

In a possible design, the receiving unit 1703 is further configured to receive, in the specific on-duration, a measurement result reported by the UE.

In a possible design, the DRX cycle is a long DRX cycle or a short DRX cycle.

In a possible design, the processing unit 1701 is further configured to determine a reporting resource; and the receiving unit 1703 is configured to receive the measurement result on the reporting resource, where the measurement result is obtained by measuring the reference signal. The reporting resource includes at least one of the following several resources: a periodic physical uplink control channel PUCCH resource configured or indicated by the network side, a semi-persistent PUCCH resource that has been activated and has not been deactivated, a semi-persistent physical uplink shared channel PUSCH resource that has been activated and has not been deactivated, and a PUCCH or PUSCH resource that has been configured by radio resource control RRC signaling and has not been released.

All related content of steps in the foregoing method embodiments may be cited in function descriptions of corresponding functional modules. Details are not described again herein.

Based on a same technical concept, an embodiment of the present invention further provides a communications apparatus, where the communications apparatus is, for example, user equipment UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

For example, referring to FIG. 18, a specific structure of the communications apparatus 1800 may include a processor 1801, and optionally, may further include a transceiver 1802. The processor 1801 and the transceiver 1802 may perform corresponding functions of the UE in the foregoing method embodiments.

Based on a same technical concept, an embodiment of the present invention further provides a communications apparatus, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

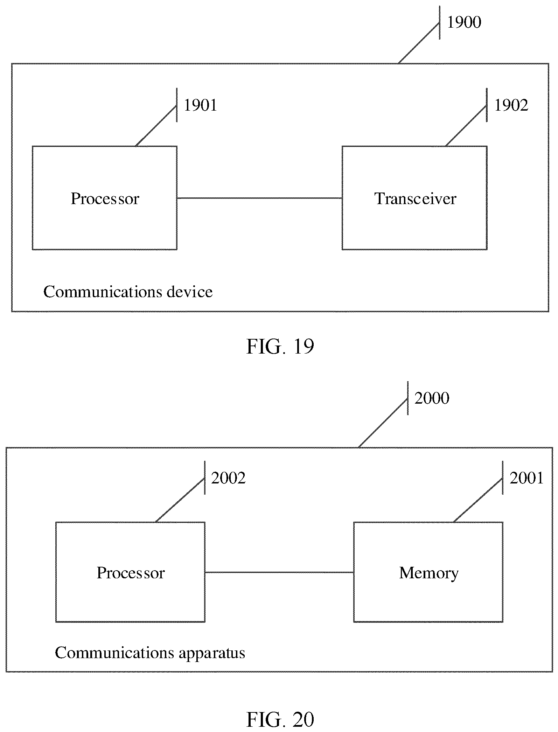

For example, referring to FIG. 19, a specific structure of the communications apparatus 1900 may include a processor 1901, and optionally, may further include a transceiver 1902. The processor 1901 and the transceiver 1902 may perform corresponding functions of the network device in the foregoing method embodiments.

Based on a same technical concept, an embodiment of the present invention further provides a communications apparatus, where the communications apparatus is, for example, user equipment UE. The communications apparatus is capable of implementing functions of the UE in the foregoing method designs. The functions may be implemented by hardware, or may be implemented by corresponding software executed by hardware. The hardware or software includes one or more units corresponding to the foregoing functions.

For example, referring to FIG. 20, a specific structure of the communications apparatus 2000 may include a memory 2001, configured to store a computer program; and a processor 2002, configured to execute the computer program stored in the memory 2001, so that the apparatus performs corresponding functions of the UE in the foregoing method embodiments.

Based on a same technical concept, an embodiment of the present invention further provides a communications apparatus, where the communications apparatus is, for example, a network device. The communications apparatus is capable of implementing functions of the network side in the foregoing method designs. The functions may be implemented by hardware, or may be implemented by corresponding software executed by hardware. The hardware or software includes one or more units corresponding to the foregoing functions.

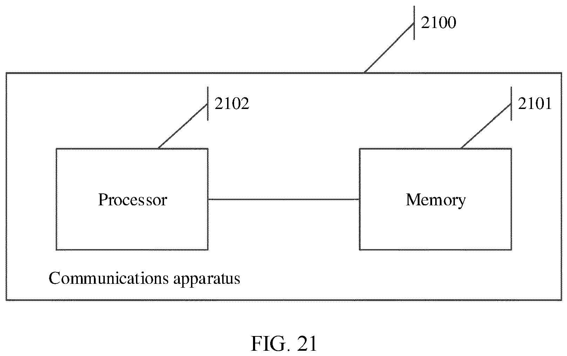

For example, referring to FIG. 21, a specific structure of the communications apparatus 2100 may include a memory 2101, configured to store a computer program; and a processor 2102, configured to execute the computer program stored in the memory 2101, so that the apparatus performs corresponding functions of the network device in the foregoing method embodiments.

It should be noted that the processor in the embodiments of the present invention may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification aims to include but is not limited to these and any memory of another proper type.

Based on a same technical concept, an embodiment of the present invention further provides a computer readable storage medium, including a program or an instruction, where when the program or the instruction is run on a computer, corresponding functions of the UE in the foregoing method embodiments are performed.

Based on a same technical concept, an embodiment of the present invention further provides a computer readable storage medium, including a program or an instruction, where when the program or the instruction is run on a computer, corresponding functions of the network device in the foregoing method embodiments are performed.

Based on a same technical concept, an embodiment of the present invention further provides a chip, where the chip is coupled to a memory, and configured to read and execute a program instruction stored in the memory to implement corresponding functions of the UE in the foregoing method embodiments.

Based on a same technical concept, an embodiment of the present invention further provides a chip, where the chip is coupled to a memory, and configured to read and execute a program instruction stored in the memory to implement corresponding functions of the network device in the foregoing method embodiments.

Based on a same technical concept, an embodiment of the present invention further provides a computer program product including an instruction, where the instruction is stored in the computer program product, and when the computer program product is run on a computer, the computer is enabled to perform corresponding functions of the UE in the foregoing method embodiments.

Based on a same technical concept, an embodiment of the present invention further provides a computer program product including an instruction, where the instruction is stored in the computer program product, and when the computer program product is run on a computer, the computer is enabled to perform corresponding functions of the network device in the foregoing method embodiments.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specified function in one or more processes in the flowcharts and/or in one or more blocks in the block diagrams.

These computer program instructions may be stored in a computer readable memory that can instruct the computer or the another programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Obviously, a person skilled in the art can make various modifications and variations to this application without departing from the protection scope of this application. This application is intended to cover these modifications and variations of this application provided that they fall within the scope of protection defined by the following claims and their equivalent technologies.

**Claims**

1. A signal measurement method, applied to user equipment UE, wherein the method comprises:

   receiving a reference signal in a non-active time non-active time in a discontinuous reception DRX state; and
   measuring the reference signal.

2. The method according to claim 1, wherein the receiving a reference signal in a non-active time in a DRX state comprises:
   receiving the reference signal in a first time period before an on-duration on-duration in the DRX state.

3. The method according to claim 2, wherein the first time period occurs periodically at specified time intervals, and a cycle in which the first time period occurs is N times a DRX cycle or a WUS cycle, wherein N is a positive integer.

4. The method according to claim 2, wherein the receiving the reference signal in a first time period before an on-duration on-duration in the DRX state comprises:
   receiving the reference signal in a first time period before an on-duration of a first DRX cycle after the UE sleeps for M consecutive DRX cycles, wherein M is an integer greater than or equal to 0.

5. The method according to any one of claims 2 to 4, wherein

   the first time period is before the on-duration and after a wake-up signal WUS detection time corresponding to the on-duration; or
   the first time period is before a WUS detection time corresponding to the on-duration.

6. The method according to any one of claims 2 to 5, wherein the method further comprises:
   determining a reference signal resource, and receiving the reference signal on the reference signal resource, wherein a time domain position of the reference signal resource is in the non-active time in the DRX state.

7. The method according to claim 6, wherein the reference signal resource comprises:
   X reference signal resources before or after the WUS detection occasion corresponding to the on-duration, wherein X is a positive integer.

8. The method according to claim 7, wherein the X reference signal resources are before the WUS detection occasion corresponding to the on-duration, and a time interval between an end time of at least one of the X reference signal resources and a start time of the WUS detection occasion is greater than or equal to a first threshold; or

   the X reference signal resources are after the WUS detection occasion corresponding to the on-duration, and a time interval between a start time of at least one of the X reference signal resources and an end time of the WUS detection occasion is greater than or equal to a second threshold; or
   the X reference signal resources are before the on-duration, and a time interval between an end time of at least one of the X reference signal resources and a start time of the on-duration is greater than or equal to a third threshold.

9. The method according to any one of claims 2 to 8, wherein the method further comprises:

   reporting a measurement result to a network side before the on-duration or in the on-duration, wherein the measurement result is obtained by measuring the reference signal; or
   after determining that a WUS signal indicates wake-up of the UE in an on-duration corresponding to the WUS signal, reporting a measurement result to a network side before the on-duration corresponding to the WUS signal or in the on-duration corresponding to the WUS signal, wherein the measurement result is obtained by measuring the reference signal; or

reporting a measurement result to a network side before the on-duration of the first DRX cycle or in the on-duration of the first DRX cycle after the UE sleeps for the M consecutive DRX cycles, wherein the measurement result is obtained by measuring the reference signal.

10. A signal measurement method, applied to a network side, wherein the method comprises:

determining a reference signal resource; and
transmitting a reference signal based on the reference signal resource in a non-active time non-active time in a discontinuous reception DRX state.

11. The method according to claim 10, wherein the transmitting a reference signal in a non-active time in a DRX state comprises:
transmitting the reference signal in a first time period before an on-duration on-duration in the DRX state.

12. The method according to claim 11, wherein the first time period occurs periodically at specified time intervals, and a cycle in which the first time period occurs is N times a DRX cycle or a WUS cycle, wherein N is a positive integer.

13. The method according to claim 11, wherein the transmitting the reference signal in a first time period before an on-duration on-duration in the DRX state comprises:
transmitting the reference signal in a first time period before an on-duration of a first DRX cycle after the UE sleeps for M consecutive DRX cycles, wherein M is an integer greater than or equal to 0.

14. The method according to any one of claims 11 to 13, wherein

the first time period is before the on-duration and after a wake-up signal WUS detection time corresponding to the on-duration; or
the first time period is before a WUS detection time corresponding to the on-duration.

15. The method according to claim 10, wherein the reference signal resource comprises:
X reference signal resources before or after the WUS detection occasion corresponding to the on-duration, wherein X is a positive integer.

16. The method according to claim 15, wherein the X reference signal resources are before the WUS detection occasion corresponding to the on-duration, and a time interval between an end time of at least one of the X reference signal resources and a start time of the WUS detection occasion is greater than or equal to a first threshold; or

the X reference signal resources are after the WUS detection occasion corresponding to the on-duration, and a time interval between a start time of at least one of the X reference signal resources and an end time of the WUS detection occasion is greater than or equal to a second threshold; or
the X reference signal resources are before the on-duration, and a time interval between an end time of at least one of the X reference signal resources and a start time of the on-duration is greater than or equal to a third threshold.

17. The method according to any one of claims 10 to 16, wherein after the transmitting a reference signal in a non-active time in a DRX state, the method further comprises:

receiving a measurement result before the on-duration or in the on-duration, wherein the measurement result is obtained by the UE by measuring the reference signal; or
after determining that a WUS signal indicates wake-up of the UE in an on-duration corresponding to the WUS signal, receiving a measurement result before the on-duration corresponding to the WUS signal or in the on-duration corresponding to the WUS signal, wherein the measurement result is obtained by the UE by measuring the reference signal; or
receiving a measurement result before the on-duration of the first DRX cycle or in the on-duration of the first DRX cycle after the UE sleeps for the M consecutive DRX cycles, wherein the measurement result is obtained by the UE by measuring the reference signal.

18. A communications apparatus, wherein the apparatus comprises:

a receiving unit, configured to receive a reference signal in a non-active time non-active time in a discontinuous reception DRX state; and
a processing unit, configured to measure the reference signal.

19. The apparatus according to claim 18, wherein the receiving unit is specifically configured to:
receive the reference signal in a first time period before an on-duration on-duration in the DRX state.

20. The apparatus according to claim 19, wherein the first time period occurs periodically at specified time intervals, and a cycle in which the first time period occurs is N times a DRX cycle or a WUS cycle, wherein N is a positive integer.

21. The apparatus according to claim 19, wherein the receiving unit is specifically configured to:
receive the reference signal in a first time period before an on-duration of a first DRX cycle after the communications apparatus sleeps for M consecutive DRX cycles, wherein M is an integer greater than or equal to 0.

22. The apparatus according to any one of claims 19 to 21, wherein

the first time period is before the on-duration and after a wake-up signal WUS detection time corresponding to the on-duration; or
the first time period is before a WUS detection time corresponding to the on-duration.

23. The apparatus according to any one of claims 19 to 22, wherein the processing unit is further configured to determine a reference signal resource; and
the receiving unit is further configured to receive the reference signal on the reference signal resource, wherein a time domain position of the reference signal resource is in the non-active time in the DRX state.

24. The apparatus according to claim 23, wherein the reference signal resource comprises:
X reference signal resources before or after the WUS detection occasion corresponding to the on-duration, wherein X is a positive integer.

25. The apparatus according to claim 24, wherein the X reference signal resources are before the WUS detection occasion corresponding to the on-duration, and a time interval between an end time of at least one of the X reference signal resources and a start time of the WUS detection occasion is greater than or equal to a first threshold; or

the X reference signal resources are after the WUS detection occasion corresponding to the on-duration, and a time interval between a start time of at least one of the X reference signal resources and an end time of the WUS detection occasion is greater than or equal to a second threshold; or
the X reference signal resources are before the on-duration, and a time interval between an end time of at least one of the X reference signal resources and a start time of the on-duration is greater than or equal to a third threshold.

26. The apparatus according to any one of claims 19 to 25, wherein the apparatus further comprises a transmission unit, configured to:

report a measurement result to a network side before the on-duration or in the on-duration, wherein the measurement result is obtained by measuring the reference signal; or
after it is determined that a WUS signal indicates wake-up of the communications apparatus in an on-duration corresponding to the WUS signal, report a measurement result to a network side before the on-duration corresponding to the WUS signal or in the on-duration corresponding to the WUS signal, wherein the measurement result is obtained by measuring the reference signal; or
report a measurement result to a network side before the on-duration of the first DRX cycle or in the on-duration of the first DRX cycle after the communications apparatus sleeps for the M consecutive DRX cycles, wherein the measurement result is obtained by measuring the reference signal.

27. A communications apparatus, wherein the apparatus comprises:

a processing unit, configured to determine a reference signal resource; and
a transmission unit, configured to transmit a reference signal based on the reference signal resource in a non-active time non-active time in a discontinuous reception DRX state.

**28.** The apparatus according to claim 27, wherein the transmission unit is specifically configured to:
transmit the reference signal in a first time period before an on-duration on-duration in the DRX state.

**29.** The apparatus according to claim 28, wherein the first time period occurs periodically at specified time intervals, and a cycle in which the first time period occurs is N times a DRX cycle or a WUS cycle, wherein N is a positive integer.

**30.** The apparatus according to claim 28, wherein the transmission unit is specifically configured to:
transmit the reference signal in a first time period before an on-duration of a first DRX cycle after the UE sleeps for M consecutive DRX cycles, wherein M is an integer greater than or equal to 0.

**31.** The apparatus according to any one of claims 28 to 30, wherein

the first time period is before the on-duration and after a wake-up signal WUS detection time corresponding to the on-duration; or
the first time period is before a WUS detection time corresponding to the on-duration.

**32.** The apparatus according to claim 27, wherein the reference signal resource comprises:
X reference signal resources before or after the WUS detection occasion corresponding to the on-duration, wherein X is a positive integer.

**33.** The apparatus according to claim 32, wherein the X reference signal resources are before the WUS detection occasion corresponding to the on-duration, and a time interval between an end time of at least one of the X reference signal resources and a start time of the WUS detection occasion is greater than or equal to a first threshold; or

the X reference signal resources are after the WUS detection occasion corresponding to the on-duration, and a time interval between a start time of at least one of the X reference signal resources and an end time of the WUS detection occasion is greater than or equal to a second threshold; or
the X reference signal resources are before the on-duration, and a time interval between an end time of at least one of the X reference signal resources and a start time of the on-duration is greater than or equal to a third threshold.

**34.** The apparatus according to any one of claims 27 to 33, wherein the apparatus further comprises:
a receiving unit, configured to:

receive a measurement result before the on-duration or in the on-duration, wherein the measurement result is obtained by the UE by measuring the reference signal; or
after it is determined that a WUS signal indicates wake-up of the UE in an on-duration corresponding to the WUS signal, receive a measurement result before the on-duration corresponding to the WUS signal or in the on-duration corresponding to the WUS signal, wherein the measurement result is obtained by the UE by measuring the reference signal; or
receive a measurement result before the on-duration of the first DRX cycle or in the on-duration of the first DRX cycle after the UE sleeps for the M consecutive DRX cycles, wherein the measurement result is obtained by the UE by measuring the reference signal.

**35.** A communications apparatus, comprising:

a memory, configured to store a computer program; and
a processor, configured to execute the computer program stored in the memory, so that the apparatus performs the method according to any one of claims 1 to 9 or 10 to 17.

**36.** A computer readable storage medium, comprising a program or an instruction, wherein when the program or the instruction is run on a computer, the method according to any one of claims 1 to 9 or 10 to 17 is performed.

**37.** A chip, wherein the chip is coupled to a memory, and configured to read and execute a program instruction stored in the memory to implement the method according to any one of claims 1 to 9 or 10 to 17.

Start a DRX-
onduration timer

The DRX-
onduration
timer expires

On-duration
(monitor a
PDCCH)

DRX cycle

FIG. 1

Active time

On-duration

PDCCH

PDSCH

Time

DRX-inactivity timer

FIG. 2

DRX-inactivity timer

No WUS
is detected

PDCCH

PDSCH

DRX-onduration timer

DRX-onduration timer

DRX cycle

DRX cycle

FIG. 3

| UE | | Network device |
|---|---|---|

S401. Transmit a reference signal in a first time period before an on-duration in a DRX state

S402. Measure the received reference signal

FIG. 4A

| UE | | Network device |
|---|---|---|

S401. Transmit a reference signal in a first time period before an on-duration in a DRX state

S402. Measure the received reference signal

S403. Report a measurement result to a network side, where the measurement result is obtained by measuring the reference signal

FIG. 4B

FIG. 5

FIG. 6A

FIG. 6B

First time period

On-duration

First time period

On-duration

WUS detection time

WUS detection time

DRX cycle

## FIG. 6C

First time period

On-duration

First time period

On-duration

DRX cycle

## FIG. 6D

CSI-RS resource

CSI-RS resource

CSI-RS resource

WUS

Active time

On-duration

Long DRX cycle

Time period including a reference signal

WUS indicating wake-up of UE

WUS indicating non wake-up of UE

Time period including a reference signal

## FIG. 7

CSI-RS
resource

Active
time

On-
duration

WUS

Long DRX cycle

⬛ WUS indicating
wake-up of UE

⬛ WUS indicating non
wake-up of UE

Time period including a
reference signal

Time period including a
reference signal

FIG. 8

CSI-RS
resource

CSI-RS
resource

Active
time

On-
duration

WUS

Long DRX cycle

⬛ WUS indicating
wake-up of UE

⬛ WUS indicating non
wake-up of UE

Time period including a
reference signal

FIG. 9

Cycle of a CSI-
RS resource #1

Cycle of a CSI-
RS resource #2

Periodic CSI-RS
resources configured
by a network

Active time

On-duration

CSI-RS resources
that UE assumes to
be definitely
transmitted

WUS

Configured
window

Long DRX cycle

WUS indicating
wake-up of UE

WUS indicating non
wake-up of UE

The UE assumes that periodic CSI-RS resources in the configured
window are definitely transmitted, in addition to those in the active time

FIG. 10

Time offset of a start time
relative to an on-duration

On-duration

Active time

WUS

Time period including a
WUS monitoring occasion

Long DRX cycle

Length of a
configured window

WUS indicating
wake-up of UE

WUS indicating non
wake-up of UE

FIG. 11

Cycle of a CSI-
RS resource #1

Cycle of a CSI-
RS resource #2

Periodic CSI-RS
resources configured
by a network

Active time   On-duration

CSI-RS resources that
UE assumes to be
definitely transmitted

WUS

Long DRX cycle

Time period between the
WUS and the on-duration

WUS indicating
wake-up of UE

WUS indicating non
wake-up of UE

Regardless of whether the WUS indicates wake-up or sleep, a CSI-RS
between the WUS and the on-duration is definitely transmitted

## FIG. 12

UE

Network
device

S1301. Transmit a reference signal to
the UE in a specific on-duration, where
at least one specific on-duration is in a
non-active time in a DRX state

S1302. Measure
the received
reference signal

## FIG. 13A

```
┌────┐                                        ┌──────────┐
│ UE │                                        │ Network  │
└────┘                                        │ device   │
                                              └──────────┘
   │      S1301. Transmit a reference signal to    │
   │      the UE in a specific on-duration, where  │
   │      at least one specific on-duration is in a│
   │         non-active time in a DRX state        │
   │◄──────────────────────────────────────────────│
┌──────────────────┐                               │
│ S1302. Measure   │                               │
│  the received    │                               │
│ reference signal │                               │
└──────────────────┘                               │
   │      S1303. Report a measurement result to the│
   │      network device in the specific on-duration,
   │      where the measurement result is obtained │
   │        by measuring the reference signal      │
   │──────────────────────────────────────────────►│
   │                                               │
```

FIG. 13B

In a specific on-duration (on-
duration) with a fixed cycle,
regardless of an indication of a WUS,
UE performs CSI measurement,
reporting, and beam management

On-duration

On-duration

WUS

Specific
on-duration

Specific
on-duration

FIG. 14

UE performs CSI measurement and reporting in
a subsequent first on-duration after the UE
sleeps for two consecutive DRX cycles

On-duration

WUS

Specific on-duration

FIG. 15

1600

Communications apparatus

1601

Receiving unit

1603

Transmission
unit

1602

Processing unit

FIG. 16

1700

Communications apparatus

1703

Receiving unit

1702

Transmission unit

1701

Processing unit

FIG. 17

1800

1801

Processor

1802

Transceiver

Communications device

FIG. 18

FIG. 19

FIG. 20

FIG. 21

## INTERNATIONAL SEARCH REPORT

International application No.

**PCT/CN2019/109718**

### A. CLASSIFICATION OF SUBJECT MATTER

H04W 52/02(2009.01)i; H04W 76/28(2018.01)i; H04W 16/28(2009.01)i

According to International Patent Classification (IPC) or to both national classification and IPC

### B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 不连续接收, 不持续接收, 不活跃, 非激活, 持续时间, 参考信号, 上报信道状态, 测量, 唤醒, 波束, 功耗, discontinuous reception, DRX, non active time, DRX inactivity timer, inactive time, off time, on duration, reference signal, RS, channel state information, CSI, CSI-RS, wake up signal, WUS, measure, beam, power

### C. DOCUMENTS CONSIDERED TO BE RELEVANT

| Category* | Citation of document, with indication, where appropriate, of the relevant passages | Relevant to claim No. |
|---|---|---|
| X | QUALCOMM INC. "UE Adaptation to the Traffic and UE Power Consumption Characteristics" *3GPP TSG-RAN WG1 Meeting #95, R1-1813447,* 16 November 2018 (2018-11-16), section 4.1, and figure 2 | 1-37 |
| X | QUALCOMM INC. "Triggering Adaptation of UE Power Consumption Characteristics" *3GPP TSG-RAN WG1 Meeting #95, R1-1813448,* 16 November 2018 (2018-11-16), section 3.1.2, and figure 3 | 1-37 |
| A | CN 107872867 A (INTEL IP CORP.) 03 April 2018 (2018-04-03) entire document | 1-37 |
| A | CN 102130711 A (ZTE CORPORATION) 20 July 2011 (2011-07-20) entire document | 1-37 |
| A | US 2018255607 A1 (QUALCOMM INC.) 06 September 2018 (2018-09-06) entire document | 1-37 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 June 2020** | **03 July 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**EP 4 030 832 A1**

**INTERNATIONAL SEARCH REPORT**
Information on patent family members

International application No.

**PCT/CN2019/109718**

| Patent document cited in search report | | | Publication date (day/month/year) | Patent family member(s) | | | Publication date (day/month/year) |
|---|---|---|---|---|---|---|---|
| CN | 107872867 | A | 03 April 2018 | EP | 3300435 | A1 | 28 March 2018 |
| CN | 102130711 | A | 20 July 2011 | WO | 2010148930 | A1 | 29 December 2010 |
| US | 2018255607 | A1 | 06 September 2018 | CN | 110431912 | A | 08 November 2019 |
| | | | | WO | 2018160969 | A1 | 07 September 2018 |
| | | | | EP | 3590302 | A1 | 08 January 2020 |
| | | | | TW | 201838460 | A | 16 October 2018 |
| | | | | IN | 201927029619 | A | 06 December 2019 |

Form PCT/ISA/210 (patent family annex) (January 2015)